# EUROPÄISCHE PATENTSCHRIFT

(11) **EP 0 665 294 B1**
(45) Veröffentlichungstag und Bekanntmachung des Hinweises auf die Patenterteilung: **19.05.1999**
(21) Anmeldenummer: 95810019.0
(22) Anmeldetag: 10.01.1995
(51) Int. Cl.: C14C 9/00, C08K 5/00, D06N 3/00

(54) **Stabilisieren von Leder gegen thermische und photochemische Zersetzung**
Stabilisation of leather against thermic and photochemical decomposition
Stabilisation du cuir contre la décomposition thermique et photochimique

(30) Priorität: 19.01.1994 CH 160/94
(43) Veröffentlichungstag der Anmeldung: 02.08.1995
(73) Patentinhaber: Ciba Specialty Chemicals Holding Inc., 4057 Basel (CH)
(72) Erfinder: Wyss, Franz, CH-4125 Riehen (CH); Arnold, Vladimir, Dr., CH-4056 Basel (CH); Dbaly, Helena, CH-4057 Basel (CH); Leuschner, Gisbert, CH-4103 Bottmingen (CH); Rembold, Manfred, Dr., CH-4148 Pfeffingen (CH); Püntener, Alois, Dr., CH-4310 Rheinfelden (CH)

(56) Entgegenhaltungen:
- EP-A- 0 164 663
- US-A- 4 812 494
- DATABASE WPI Week 9034, Derwent Publications Ltd., London, GB; AN 90-256482 & JP-A-2 178 350 (KURARAY) 11. Juli 1990

## Beschreibung

Die vorliegende Erfindung betrifft ein Verfahren zur Verbesserung der Beständigkeit von Leder und Lederimitaten gegen den Einfluss von Licht und/oder Wärme, indem man diese Substrate mit wässrigen Flotten, enthaltend ein sterisch gehindertes Amin, einen UV-Absorber und/oder ein Antioxidans, behandelt. Ausserdem betrifft die vorliegende Erfindung zur Durchführung dieser Verfahren verwendete wässrige Flotten sowie in Wasser emulgierbare oder dispergierbare Handelsformen von sterisch gehinderten Aminen, UV-Absorbern und Antioxidantien, welche zur Bereitung dieser wässrigen Flotten geeignet sind.

Sterisch gehinderte Amine werden vielfach zum fotochemischen Stabilisieren von verschiedenen Materialien, insbesondere von synthetischen Polymeren, eingesetzt. Dabei werden diese Amine meistens in die ggf. geschmolzenen Polymeren eingearbeitet, z.B. durch Mischen, Mahlen, Kneten etc.

Es ist auch bereits bekannt, wasserunlösliche sterisch gehinderte Amine aus wässriger Flotte in Gegenwart von Dispergatoren und/oder Emulgatoren auf synthetische Polymere, wie z.B. Polypropylenfasern oder Lederimitate auf der Basis Polyurethan/Polyamid, aufzubringen. Die sterisch gehinderten Amine werden dazu beispielsweise als Handelsform, enthaltend das Amin, Dispergator und/oder Emulgator sowie ggf. Wasser, eingesetzt. Die bekannten Handelsformen vermögen jedoch nicht, allen gestellten Anforderungen zu genügen, und vor allem beim Stabilisieren von Leder unter Verwendung dieser Handelsformen können noch nicht alle Wünsche der lederverarbeitenden Industrie befriedigt werden.

Es wurden nun neue Handelsformen mit verbesserten Eigenschaften bei der Verwendung in wässriger Flotte gefunden, die sich insbesondere durch eine einwandfreie Emulgierbarkeit bzw. Dispergierbarkeit auszeichnen, sich problemlos in wässrige Latices oder Flotten einarbeiten lassen und sich hervorragend zum Stabilisieren von Leder gegen thermische und photochemische Zersetzung eignen.

Gegenstand der vorliegenden Erfindung ist daher ein Verfahren zur Verbesserung der Beständigkeit von Leder und Lederimitaten gegen den Einfluss von Licht und/oder Wärme, dadurch gekennzeichnet, dass man diese Substrate mit einer wässrigen Emulsion oder Dispersion behandelt, enthaltend einen Emulgator oder Dispergator sowie
a) ein wasserunlösliches sterisch gehindertes Amin,
b) einen wasserunlöslichen UV-Absorber und/oder
c) ein wasserunlösliches Antioxidans sowie
d) gegebenenfalls weitere Zusätze.

Durch die kombinierte Verwendung von sterisch gehindertem Amin, UV-Absorber und/oder Antioxidans erzielt man einen hervorragenden Schutz gegen thermische und photochemische Zersetzung. Man kann das zu behandelnde Substrat in beliebiger Reihenfolge nacheinander mit je einer wässrigen Flotte, enthaltend ein sterisch gehindertes Amin, einen UV-Absorber und ein Antioxidans behandeln, vorzugsweise sind diese Mittel jedoch in einer einzigen Behandlungsflotte enthalten.

Bevorzugte erfindungsgemässe Verfahren sind dadurch gekennzeichnet, dass man die Substrate mit einer wässrigen Emulsion behandelt, enthaltend einen Emulgator sowie
a) ein wasserunlösliches sterisch gehindertes Amin,
b) einen wasserunlöslichen UV-Absorber und/oder
c) ein wasserunlösliches Antioxidans sowie
d) gegebenenfalls weitere Zusätze.

Ein weiterer Gegenstand der vorliegenden Erfindung sind wässrige Flotten zur Durchführung der erfindungsgemässen Verfahren, welche dadurch gekennzeichnet sind, dass sie Wasser, einen Emulgator oder Dispergator sowie
a) ein wasserunlösliches sterisch gehindertes Amin,
b) einen wasserunlöslichen UV-Absorber und/oder
c) ein wasserunlösliches Antioxidans sowie
d) gegebenenfalls weitere Zusätze enthalten.

Bevorzugt verwendete wässrige Flotten enthalten einen Emulgator sowie
a) ein wasserunlösliches sterisch gehindertes Amin,
b) einen wasserunlöslichen UV-Absorber und/oder
c) ein wasserunlösliches Antioxidans sowie
d) gegebenenfalls weitere Zusätze.

Ein weiterer Gegenstand der vorliegenden Erfindung sind Handelsformen von sterisch gehinderten Aminen, UV-Absorbern und Antioxidantien, die sich zur Bereitung der wässrigen Flotten eignen.

Die erfindungsgemässen Handelsformen von sterisch gehindertem Amin sind dadurch gekennzeichnet, dass sie
a) ein wasserunlösliches sterisch gehindertes Amin,
b) einen Polyalkohol, der ganz oder teilweise mit einer Fettsäure verestert ist,
c) ein Umsetzungsprodukt aus einem Polyalkohol, der ganz oder teilweise mit einer Fettsäure verestert ist, und einem Alkylenoxid, und
d) gegebenenfalls Wasser sowie weitere Zusätze enthalten.

Die erfindungsgemässen Handelsformen von UV-Absorbern sind dadurch gekennzeichnet, dass sie
a) einen wasserunlöslichen UV-Absorber,
b) einen Polyalkohol, der ganz oder teilweise mit einer Fettsäure verestert ist,
c) ein Umsetzungsprodukt aus einem Polyalkohol, der ganz oder teilweise mit einer Fettsäure verestert ist, und einem Alkylenoxid, und
d) gegebenenfalls Wasser sowie weitere Zusätze enthalten.

Die erfindungsgemässen Handelsformen von Antioxidantien sind dadurch gekennzeichnet, dass sie
a) ein wasserunlösliches Antioxidans,
b) einen Polyalkohol, der ganz oder teilweise mit einer Fettsäure verestert ist,
c) ein Umsetzungsprodukt aus einem Polyalkohol, der ganz oder teilweise mit einer Fettsäure verestert ist, und einem Alkylenoxid, und
d) gegebenenfalls Wasser sowie weitere Zusätze enthalten.

Man kann diese Handelsformen jeweils einzeln in Wasser geben und mit den erhaltenen Flotten das Leder oder Lederimitat behandeln. Man kann aber auch sterisch gehindertes Amin, UV-Absorber und/oder Antioxidants in einer einzigen Handelsform vereinigen.

Ein weiterer Gegenstand der vorliegenden Erfindung sind Handelsformen, enthaltend sterisch gehinderte Amine und UV-Absorber und/oder Antioxidantien, die sich zur Bereitung der wässrigen Flotten eignen.

Solche erfindungsgemässen Handelsformen sind dadurch gekennzeichnet, dass sie
a) ein wasserunlösliches sterisch gehindertes Amin,
a1) einen wasserunlöslichen UV-Absorber und/oder
a2) ein wasserunlösliches Antioxidans,
b) einen Polyalkohol, der ganz oder teilweise mit einer Fettsäure verestert ist,
c) ein Umsetzungsprodukt aus einem Polyalkohol, der ganz oder teilweise mit einer Fettsäure verestert ist, und einem Alkylenoxid, und
d) gegebenenfalls Wasser sowie weitere Zusätze enthalten.

Als bevorzugtes sterisch gehindertes Amin wird erfindungsgemäss eine Verbindung verwendet, die mindestens eine Gruppe der Formel I enthält, 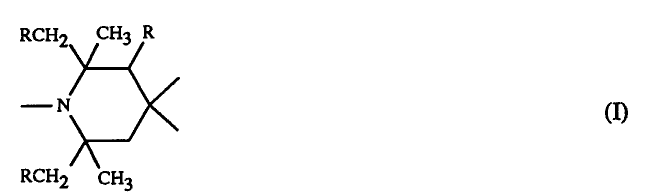 worin R Wasserstoff oder Methyl ist.

Solche sterisch gehinderten Amine können niedermolekular (MG < 700) oder höhermolekular (Oligomere, Polymere) sein. Bevorzugt tragen diese Gruppen einen oder zwei polare Substituenten in 4-Stellung oder ein polares Spiro-Ringsystem ist an die 4-Stellung gebunden.

Von besonderem Interesse sind

a) sterisch gehinderte Amine der Formel II 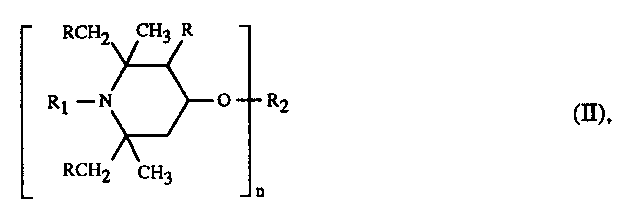 worin n eine Zahl von 1 bis 4, vorzugsweise 1 oder 2 bedeutet, R Wasserstoff oder Methyl bedeutet, R₁ Wasserstoff, Hydroxy, C₁-C₁₂-Alkyl, C₃-C₈ Alkenyl, C₃-C₈ Alkinyl, C₇-C₁₂ Aralkyl, C₁-C₈ Alkanoyl, C₃-C₅ Alkenoyl, Glycidyl, -O-C₁-C₁₂-Alkyl, -O-C₁-C₈-Alkanoyl oder eine Gruppe -CH₂CH(OH)-Z, worin Z Wasserstoff, Methyl oder Phenyl ist, bedeutet, wobei R₁ vorzugsweise Wasserstoff, C₁-C₄ Alkyl, Allyl, Benzyl, Acetyl oder Acryloyl ist und R₂, wenn n 1 ist, Wasserstoff, gegebenenfalls durch ein oder mehrere Sauerstoffatome unterbrochenes C₁-C₁₈ Alkyl, Cyanethyl, Benzyl, Glycidyl, einen einwertigen Rest einer aliphatischen, cycloaliphatischen, araliphatischen, ungesättigten oder aromatischen Carbonsäure, Carbaminsäure oder Phosphor enthaltenden Säure oder einen einwertigen Silylrest, vorzugsweise einen Rest einer aliphatischen Carbonsäure mit 2 bis 18 C-Atomen, einer cycloaliphatischen Carbonsäure mit 7 bis 15 C-Atomen, einer α,β-ungesättigten Carbonsäure mit 3 bis 5 C-Atomen oder einer aromatischen Carbonsäure mit 7 bis 15 C-Atomen bedeutet, wenn n 2 ist, C₁-C₁₂ Alkylen, C₄-C₁₂ Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen Dicarbonsäure mit 2 bis 36 C-Atomen, einer cycloaliphatischen oder aromatischen Dicarbonsäure mit 8 - 14 C-Atomen oder einer aliphatischen, cycloaliphatischen oder aromatischen Dicarbaminsäure mit 8 - 14 C-Atomen bedeutet, wenn n 3 ist, einen dreiwertigen Rest einer aliphatischen, cycloaliphatischen oder aromatischen Tricarbonsäure, einer aromatischen Tricarbaminsäure oder einer Phosphor enthaltenden Säure oder einen dreiwertigen Silylrest bedeutet und wenn n 4 ist, einen vierwertigen Rest einer aliphatischen, cycloaliphatischen oder aromatischen Tetracarbonsäure bedeutet.

Bedeuten etwaige Substituenten C₁-C₁₂ Alkyl, so stellen sie z.B. Methyl, Ethyl, n-Propyl, n-Butyl, sek.-Butyl, tert-Butyl, n-Hexyl, n-Octyl, 2-Ethyl-hexyl, n-Nonyl, n-Decyl, n-Undecyl oder n-Dodecyl dar.

In der Bedeutung von C₁-C₁₈ Alkyl kann R₁ oder R₂ z.B. die oben angeführten Gruppen und dazu noch beispielsweise n-Tridecyl, n-Tetradecyl, n-Hexadecyl oder n-Octadecyl darstellen.

Wenn R₁ C₃-C₈ Alkenyl bedeutet, so kann es sich z.B. um 1-Propenyl, Allyl, Methallyl, 2-Butenyl, 2-Pentenyl, 2-Hexenyl, 2-Octenyl oder 4-tert.-Butyl-2-butenyl handeln.

R₁ ist als C₃-C₈ Alkinyl bevorzugt Propargyl.

Als C₇-C₁₂ Aralkyl ist R₁ insbesondere Phenethyl und vor allem Benzyl.

R₁ ist als C₁-C₈ Alkanoyl beispielsweise Formyl, Propionyl, Butyryl, Octanoyl, aber bevorzugt Acetyl und als C₃-C₅ Alkenoyl insbesondere Acryloyl.

Bedeutet R₂ einen einwertigen Rest einer Carbonsäure, so stellt es beispielsweise einen Essigsäure-, Capronsäure-, Stearinsäure-, Acrylsäure-, Methacrylsäure-, Benzoesäure- oder β-(3,5-Di-tert.-butyl-4-hydroxyphenyl)-propionsäurerest dar.

Bedeutet R₂ einen zweiwertigen Rest einer Dicarbonsäure, so stellt es beispielsweise einen Malonsäure-, Bernsteinsäure-, Glutarsäure-, Adipinsäure-, Korksäure-, Sebacinsäure-, Maleinsäure-, Phthalsäure-, Dibutylmalonsäure-, Dibenzylmalonsäure-, Butyl-(3,5-di-tert.-butyl-4-hydroxybenzyl)-malonsäure- oder Bicycloheptendicarbonsäurerest dar.

Stellt R₂ einen dreiwertigen Rest einer Tricarbonsäure dar, so bedeutet es z.B. einen Trimellitsäure- oder einen Nitrilotriessigsäurerest.

Stellt R₂ einen vierwertigen Rest einer Tetracarbonsäure dar, so bedeutet es z.B. den vierwertigen Rest von Butan-1,2,3,4-tetracarbonsäure oder von Pyromellitsäure.

Bedeutet R₂ einen zweiwertigen Rest einer Dicarbaminsäure, so stellt es beispielsweise einen Hexamethylendicarbaminsäure- oder einen 2,4-Toluylen-dicarbaminsäurerest dar.

Beispiele für sterisch gehinderte Amine der Formel (II) sind folgende Verbindungen:
1) 4-Hydroxy-2,2,6,6-tetramethylpiperidin
2) 1-Allyl-4-hydroxy-2,2,6,6-tetramethylpiperidin
3) 1-Benzyl-4-hydroxy-2,2,6,6-tetramethylpiperidin
4) 1-(4-tert.-Butyl-2-butenyl)-4-hydroxy-2,2,6,6-tetramethylpiperidin
5) 4-Stearoyloxy-2,2,6,6-tetramethylpiperidin
6) 1-Ethyl-4-salicyloyloxy-2,2,6,6-tetramethylpiperidin
7) 4-Methacryloyloxy-1,2,2,6,6-pentamethylpiperidin
8) 1,2,2,6,6-Pentamethylpiperidin-4-yl-β-(3,5-di-tert.-butyl-4-hydroxyphenyl)-propionat
9) Di-(1-benzyl-2,2,6,6-tetramethylpiperidin-4-yl)-maleinat
10) Di-(2,2,6,6-tetramethylpiperidin-4-yl)-succinat
11) Di-(2,2,6,6-tetramethylpiperidin-4-yl)-glutarat
12) Di-(2,2,6,6-tetramethylpiperidin-4-yl)-adipat
13) Di-(2,2,6,6-tetramethylpiperidin-4-yl)-sebacat
14) Di-(1,2,2,6,6-pentamethylpiperidin-4-yl)-sebacat
15) Di-(1,2,3,6-tetramethyl-2,6-diethyl-piperidin-4-yl)-sebacat
16) Di-(1-allyl-2,2,6,6-tetramethylpiperidin-4-yl)-phthalat
17) 1-Propargyl-4-β-cyanoethyloxy-2,2,6,6-tetramethylpiperidin
18) 1-Acetyl-2,2,6,6-tetramethylpiperidin-4-yl-acetat
19) Trimellithsäure-tri-(2,2,6,6-tetramethylpiperidin-4-yl)-ester
20) 1-Acryloyl-4-benzyloxy-2,2,6,6-tetramethylpiperidin
21) Diethylmalonsäure-di(2,2,6,6-tetramethylpiperidin-4-yl)-ester
22) Dibutyl-malonsäure-di-(1,2,2,6,6-pentamethylpiperidin-4-yl)-ester
23) Butyl-(3,5-di-tert.-butyl-4-hydroxybenzyl)-malonsäure-di-(1,2,2,6,6-pentamethylpiperidin-4-yl)-ester
24) Dibenzyl-malonsäure-di-(1,2,2,6,6-pentamethylpiperidin-4-yl)-ester
25) Dibenzyl-malonsäure-di-(1,2,3,6-tetramethyl-2,6-diethyl-piperidin-4-yl)ester
26) Hexan-1',6'-bis-(4-carbamoyloxy-1-n-butyl-2,2,6,6-tetramethyl-piperidin)
27) Toluol-2',4'-bis-(4-carbamoyloxy-1-n-propyl-2,2,6,6-tetramethyl-piperidin)
28) Dimethyl-bis-(2,2,6,6-tetramethylpiperidin-4-oxy)-silan
29) Phenyl-tris-(2,2,6,6-tetramethylpiperidin-4-oxy)-silan
30) Tris-(1-propyl-2,2,6,6-tetramethylpiperidin-4-yl)-phosphit
31) Tris-(1-propyl-2,2,6,6-tetramethylpiperidin-4-yl)phosphat
32) Phenyl-[bis-(1,2,2,6,6-pentamethylpiperidin-4-yl)]-phosphonat
33) 4-Hydroxy-1,2,2,6,6-pentamethylpiperidin
34) 4-Hydroxy-N-hydroxyethyl-2,2,6,6-tetramethylpiperidin
35) 4-Hydroxy-N-(2-hydroxypropyl)-2,2,6,6-tetramethylpiperidin
36) 1-Glycidyl-4-hydroxy-2,2,6,6-tetramethylpiperidin

b) Verbindungen der Formel (III) 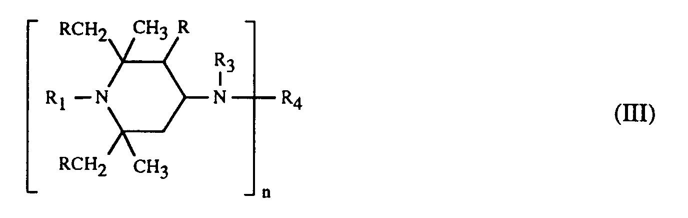 worin n die Zahl 1 oder 2 bedeutet, R und R₁ die unter der Formel (II) angegebene Bedeutung haben, R₃ Wasserstoff, C₁-C₁₂ Alkyl, C₂-C₅ Hydroxyalkyl, C₅-C₇ Cycloalkyl, C₇-C₈ Aralkyl, C₂-C₁₈Alkanoyl, C₃-C₅Alkenoyl oder Benzoyl ist und R₄ wenn n 1 ist, Wasserstoff, C₁-C₁₈ Alkyl, C₃-C₈Alkenyl, C₅-C₇ Cycloalkyl, mit einer Hydroxy-, Cyano-, Alkoxycarbonyl- oder Carbamidgruppe substituiertes C₁-C₄ Alkyl, Glycidyl, eine Gruppe der Formel -CH₂-CH(OH)-Z oder der Formel -CONH-Z ist, worin Z Wasserstoff, Methyl oder Phenyl bedeutet; wenn n 2 ist, C₂-C₁₂ Alkylen, C₆-C₁₂ Arylen, Xylylen, eine -CH₂-CH(OH)-CH₂-Gruppe oder eine Gruppe -CH₂-CH(OH)-CH₂-O-D-O- bedeutet, worin D C₂-C₁₀ Alkylen, C₆-C₁₅ Arylen, C₆-C₁₂ Cycloalkylen ist, oder vorausgesetzt, dass R₃ nicht Alkanoyl, Alkenoyl oder Benzoyl bedeutet, R₄ auch einen zweiwertigen Rest einer aliphatischen, cycloaliphatischen oder aromatischen Dicarbonsäure oder Dicarbaminsäure oder auch die Gruppe -CO- bedeuten kann, oder R₃ und R₄ zusammen, wenn n 1 ist, den zweiwertigen Rest einer aliphatischen, cycloaliphatischen oder aromatischen 1,2- oder 1,3-Dicarbonsäure bedeuten können.

Stellen etwaige Substituenten C₁-C₁₂- oder C₁-C₁₈-Alkyl dar, so haben sie die bereits unter a) angegebene Bedeutung.

Bedeuten etwaige Substituenten C₅-C₇ Cycloalkyl, so stellen sie insbesondere Cyclohexyl dar.

Als C₇-C₈ Aralkyl ist R₃ insbesondere Phenylethyl oder vor allem Benzyl. Als C₂-C₅Hydroxyalkyl ist R₃ insbesondere 2-Hydroxyethyl oder 2-Hydroxypropyl.

R₃ ist als C₂-C₁₈ Alkanoyl beispielsweise Propionyl, Butyryl, Octanoyl, Dodecanoyl, Hexadecanoyl, Octadecanoyl, aber bevorzugt Acetyl und als C₃-C₅ Alkenoyl insbesondere Acryloyl.

Bedeutet R₄ C₂-C₈ Alkenyl, dann handelt es sich z.B. um Allyl, Methallyl, 2-Butenyl, 2-Pentenyl, 2-Hexenyl oder 2-Octenyl.

R₄ als mit einer Hydroxy-, Cyano-, Alkoxycarbonyl- oder Carbamidgruppe substituiertes C₁-C₄-Alkyl kann z.B. 2-Hydroxyethyl, 2-Hydroxypropyl, 2-Cyanethyl, Methoxycarbonylmethyl, 2-Ethoxycarbonylethyl, 2-Aminocarbonylpropyl oder 2-(Dimethylaminocarbonyl)-ethyl sein.

Stellen etwaige Substituenten C₂-C₁₂ Alkylen dar, so handelt es sich z.B. um Ethylen, Propylen, 2,2-Dimethylpropylen, Tetramethylen, Hexamethylen, Octamethylen, Decamethylen oder Dodecamethylen.

Bedeuten etwaige Substituenten C₆-C₁₅-Arylen, so stellen sie z.B. o-, m- oder p-Phenylen, 1,4-Naphthylen oder 4,4'-Diphenylen dar.

Als C₆-C₁₂ Cycloalkylen ist D insbesondere Cyclohexylen.

Bedeuten R₃ und R₄ zusammen, wenn n 1 ist, den zweiwertigen Rest einer aliphatischen, cycloaliphatischen oder aromatischen 1,2- oder 1,3-Dicarbonsäure, so handelt es sich beispielsweise um den Rest von Bernsteinsäure, Glutarsäure oder Phthalsäure.

Beispiele für sterisch gehinderte Amine der Formel (III) sind folgende Verbindungen:
37) N,N'-Bis-(2,2,6,6-tetramethylpiperidin-4-yl)-hexamethylen-1,6-diamin
38) N,N'-Bis-(2,2,6,6-tetramethylpiperidin-4-yl)-hexamethylen-1,6-diacetamid
39) 1-Acetyl-4-(N-cyclohexylacetamido)-2,2,6,6-tetramethylpiperidin
40) 4-Benzoylamino-2,2,6,6-tetramethylpiperidin
41) N,N'-Bis-(2,2,6,6-tetramethylpiperidin-4-yl)-N,N'-dibutyl-adipamid
42) N,N'-Bis-(2,2,6,6-tetramethylpiperidin-4-yl)-N,N'-dicyclohexyl-2-hydroxypropylen-1,3-diamin
43) N,N'-Bis-(2,2,6,6-tetramethylpiperidin-4-yl)-p-xylylen-diamin
44) N,N'-Bis-(2,2,6,6-tetramethylpiperidin-4-yl)-succindiamid
45) N-(2,2,6,6-Tetramethylpiperidin-4-yl)-β-aminodipropionsäure-di-(2,2,6,6-tetramethylpiperidin-4-yl)-ester
46) Die Verbindung der Formel 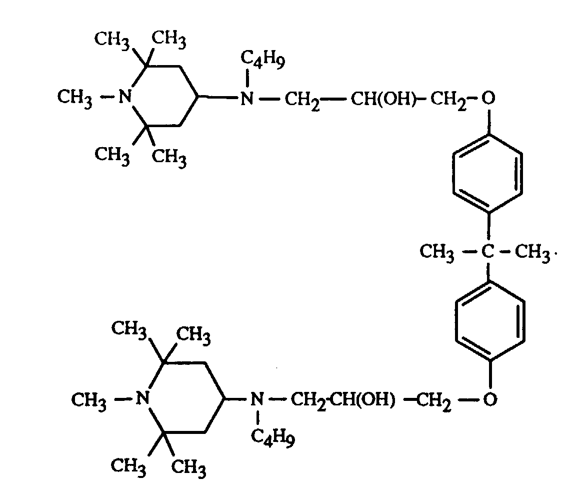
47) 4-(Bis-2-hydroxyethyl-amino)-1,2,2,6,6-pentamethylpiperidin
48) 4-(3-Methyl-4-hydroxy-5-tert.-butyl-benzoesäureamido)-2,2,6,6-tetramethylpiperidin
49) 4-Methacrylamido-1,2,2,6,6-pentamethylpiperidin
49a) Die Verbindung der Formel 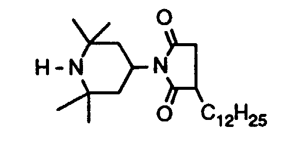
49b) Die Verbindung der Formel 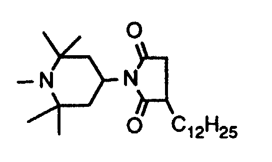
49c) 4-Amino-2,2,6,6-tetramethylpiperidin
49d) 4-Amino-1,2,2,6,6-pentamethylpiperidin.

c) Verbindungen der Formel (IV) 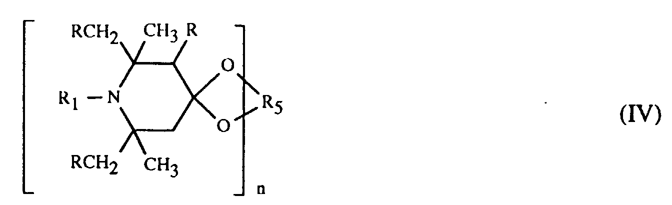 worin n die Zahl 1 oder 2 bedeutet, R und R₁ die unter a) angegebene Bedeutung haben und R₅, wenn n 1 ist, C₂-C₈- Alkylen oder -Hydroxyalkylen oder C₄-C₂₂ Acyloxyalkylen, wenn n 2 ist, die Gruppe (-CH₂)₂C(CH₂-)₂ bedeutet

Bedeutet R₅ C₂-C₈-Alkylen oder -Hydroxyalkylen, so stellt es beispielsweise Ethylen, 1-Methyl-ethylen, Propylen, 2-Ethyl-propylen oder 2-Ethyl-2-hydroxymethylpropylen dar.

Als C₄-C₂₂ Acyloxyalkylen bedeutet R₅ z.B. 2-Ethyl-2-acetoxymethylpropylen.

Beispiele für sterisch gehinderte Amine der Formel (IV) sind folgende Verbindungen:
50) 9-Aza-8,8,10,10-tetramethyl-1,5-dioxaspiro[5.5]undecan
51) 9-Aza-8,8,10,10-tetramethyl-3-ethyl-1,5-dioxaspiro[5.S]undecan
52) 8-Aza-2,7,7,8,9,9-hexamethyl-1,4-dioxaspiro[4.5]decan
53) 9-Aza-3-hydroxymethyl-3-ethyl-8,8,9,10,10-pentamethyl-1,5-dioxaspiro[5.5]undecan
54) 9-Aza-3-ethyl-3-acetoxymethyl-9-acetyl-8,8,10,10-tetramethyl-1,5-dioxaspiro[5.5]undecan
55) 2,2,6,6-Tetramethylpiperidin-4-spiro-2'-(1',3'-dioxan)-5'-spiro-5"-(1",3"-dioxan)-2"-spiro-4"'-(2"',2'",6"',6"'-tetramethylpiperidin).

d) Verbindungen der Formeln VA, VB und VC 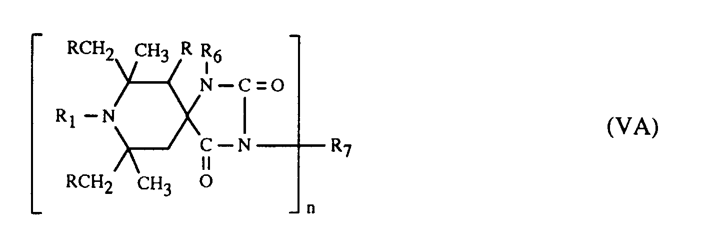 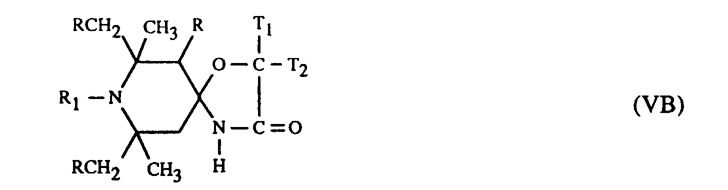 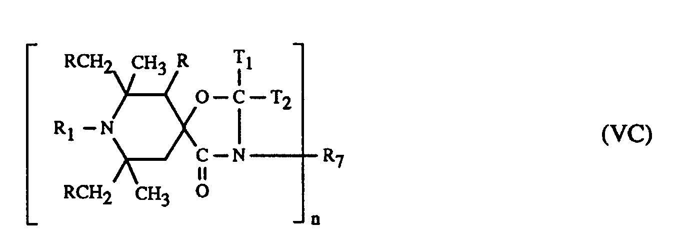 worin n die Zahl 1 oder 2 bedeutet, R und R₁ die unter der Formel (II) angegebene Bedeutung haben, R₆ Wasserstoff, C₁-C₁₂ Alkyl, Allyl, Benzyl, Glycidyl oder C₂-C₆ Alkoxyalkyl ist und R₇, wenn n 1 ist, Wasserstoff, C₁-C₁₂ Alkyl, C₃-C₅ Alkenyl, C₇-C₉ Aralkyl, C₅-C₇ Cycloalkyl, C₂-C₄ Hydroxyalkyl, C₂-C₆ Alkoxyalkyl, C₆-C₁₀ Aryl, Glycidyl oder eine Gruppe der Formel -(CH₂)ₚ-COO-Q oder der Formel -(CH₂)ₚ-O-CO-Q ist, worin p 1 oder 2 und Q C₁-C₄ Alkyl oder Phenyl sind, wenn n 2 ist, C₂-C₁₂ Alkylen, C₄-C₁₂-Alkenylen, C₆-C₁₂ Arylen, eine Gruppe -CH₂-CH(OH)-CH₂-O-D-O-CH₂CH(OH)-CH₂-, worin D C₂-C₁₀ Alkylen, C₆-C₁₅Arylen, C₆-C₁₂Cycloalkylen ist, oder eine Gruppe -CH₂CH(OZ')CH₂-(OCH₂-CH(OZ')CH₂)₂-bedeutet, worin Z' Wasserstoff, C₁-C₁₈ Alkyl, Allyl, Benzyl, C₂-C₁₂ Alkanoyl oder Benzoyl ist, T₁ und T₂ unabhängig voneinander Wasserstoff, C₁-C₁₈ Alkyl oder gegebenenfalls durch Halogen oder C₁-C₄ Alkyl substituiertes C₆-C₁₀ Aryl oder C₇-C₉ Aralkyl bedeuten oder T₁ und T₂ zusammen mit dem sie bindenden C-Atom einen C₅-C₁₂ Cycloalkanring bilden.

Bedeuten etwaige Substituenten C₁-C₁₂ Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

Etwaige Substituenten in der Bedeutung von C₁-C₁₈ Alkyl können z.B. die oben angeführten Gruppen und dazu noch beispielsweise n-Tridecyl, n-Tetradecyl, n-Hexadecyl oder n-Octadecyl darstellen.

Bedeuten etwaige Substituenten C₂-C₆ Alkoxyalkyl, so stellen sie z.B. Methoxymethyl, Ethoxymethyl, Propoxymethyl, tert.-Butoxymethyl, Ethoxyethyl, Ethoxypropyl, n-Butoxyethyl, tert.-Butoxyethyl, Isopropoxyethyl oder Propoxypropyl dar.

Stellt R₇ C₃-C₅ Alkenyl dar, so bedeutet es z.B. 1-Propenyl, Allyl, Methallyl, 2-Butenyl oder 2-Pentenyl.

Als C₇-C₉ Aralkyl sind R₇, T₁ und T₂ insbesondere Phenethyl oder vor allem Benzyl. Bilden T₁ und T₂ zusammen mit dem C-Atom einen Cycloalkanring, so kann dies z.B. ein Cyclopentan-, Cyclohexan-, Cyclooctan- oder Cyclododecanring sein.

Bedeutet R₇ C₂-C₄ Hydroxyalkyl, so stellt es z.B. 2-Hydroxyethyl, 2-Hydroxypropyl, 2-Hydroxybutyl oder 4-Hydroxybutyl dar.

Als C₆-C₁₀ Aryl bedeuten R₇, T₁ und T₂ insbesondere Phenyl, α- oder β-Naphthyl, die gegebenenfalls mit Halogen oder C₁-C₄ Alkyl substituiert sind.

Stellt R₇ C₂-C₁₂ Alkylen dar, so handelt es sich z.B. um Ethylen, Propylen, 2,2-Dimethylpropylen, Tetramethylen, Hexamethylen, Octamethylen, Decamethylen oder Dodecamethylen.

Als C₄-C₁₂ Alkenylen bedeutet R₇ insbesondere 2-Butenylen, 2-Pentenylen oder 3-Hexenylen.

Bedeutet R₇ C₆-C₁₂ Arylen, so stellt es beispielsweise o-, m- oder p-Phenylen, 1,4-Naphthylen oder 4,4'-Diphenylen dar.

Bedeutet Z' C₂-C₁₂ Alkanoyl, so stellt es beispielsweise Propionyl, Butyryl, Octanoyl, Dodecanoyl, aber bevorzugt Acetyl dar.

D hat als C₂-C₁₀ Alkylen, C₆-C₁₅ Arylen oder C₆-C₁₂ Cycloalkylen die unter der Formel (III) angegebene Bedeutung.

Beispiele für sterisch gehinderte Amine der Formeln (VA), (VB) und (VC) sind folgende Verbindungen:
56) 3-Benzyl-1,3,8-triaza-7,7,9,9-tetramethylspiro[4.5]decan-2,4-dion
57) 3-n-Octyl-1,3,8-triaza-7,7,9,9-tetramethylspiro[4.5]decan-2,4-dion
58) 3-Allyl-1,3,8-triaza-1,7,7,9,9-pentamethylspiro[4.5]decan-2,4-dion
59) 3-Glycidyl-1,3,8-triaza-7,7,8,9,9-pentamethylspiro[4.5]decan-2,4-dion
60) 1,3,7,7,8,9,9-Heptamethyl-1,3,8-triazaspiro[4.5]decan-2,4-dion
61) 2-Iso-propyl-7,7,9,9-tetramethyl-1-oxa-3,8-diaza-4-oxo-spiro-[4.5]decan
62) 2,2-Dibutyl-7,7,9,9-tetramethyl-1-oxa-3,8-diaza-4-oxo-spiro-[4.5]decan
63) 2,2,4,4-Tetramethyl-7-oxa-3,20-diaza-21-oxo-dispiro[5.1.11.2]-heneicosan
64) 2-Butyl-7,7,9,9-tetramethyl-1-oxa-4,8-diaza-3-oxo-spiro-[4,5]decan
65) 8-Acetyl-3-dodecyl-1,3,8-triaza-7,7,9,9-tetramethylspiro[4,5]-decan-2,4-dion oder die Verbindungen der folgenden Formeln:

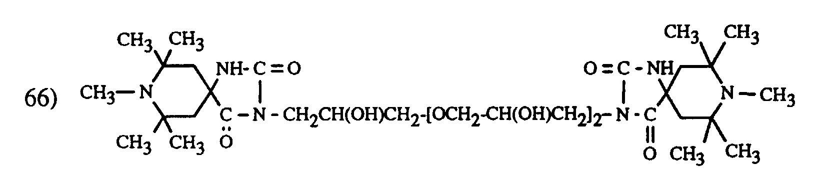

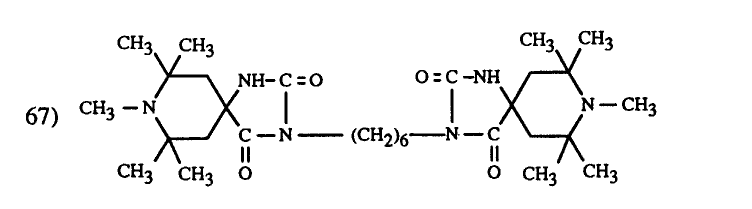

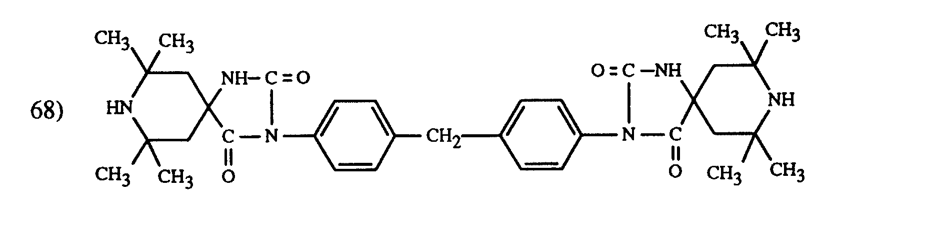

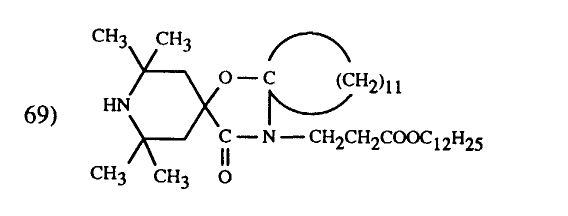

e) Verbindungen der Formel VI 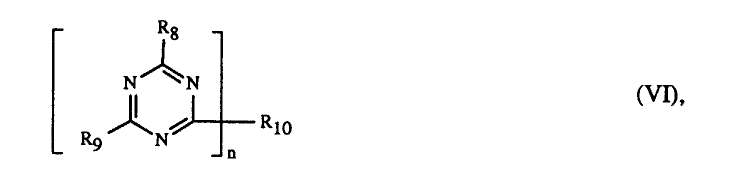 worin n die Zahl 1 oder 2 ist und R₈ eine Gruppe der Formel 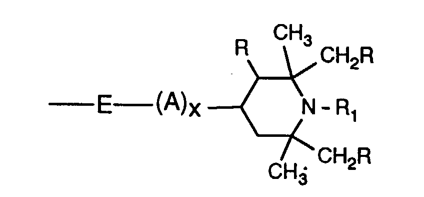 bedeutet, worin R und R₁ die unter der Formel (II) angegebene Bedeutung haben, E -O-oder -NR₁₁- ist, A C₂-C₆-Alkylen oder -(CH₂)₃-O- und x die Zahlen O oder 1 bedeuten, R₉ gleich R₈ oder eine der Gruppen -NR₁₁R₁₂, -OR₁₃, -NHCH₂OR₁₃ oder -N(CH₂OR₁₃)₂ ist, R₁₀, wenn n = 1 ist, gleich R₈ oder R₉, und wenn n = 2 ist, eine Gruppe -E-B-E- ist, worin B gegebenenfalls durch -N(R₁₁)- unterbrochenes C₂-C₆ Alkylen bedeutet, R₁₁ C₁-C₁₂ Alkyl, Cyclohexyl, Benzyl oder C₁-C₄ Hydroxyalkyl oder eine Gruppe der Formel 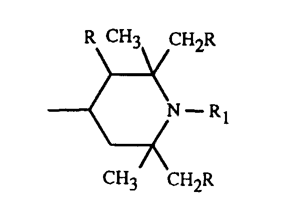 ist, R₁₂ C₁-C₁₂ Alkyl, Cyclohexyl, Benzyl, C₁-C₄ Hydroxyalkyl und R₁₃ Wasserstoff, C₁-C₁₂ Alkyl oder Phenyl bedeuten oder R₁₁ und R₁₂ zusammen C₄-C₅-Alkylen oder -Oxaalkylen, beispielsweise 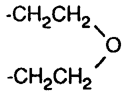 oder eine Gruppe der Formel 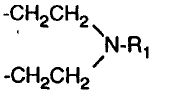 sind oder auch R₁₁ und R₁₂ jeweils eine Gruppe der Formel 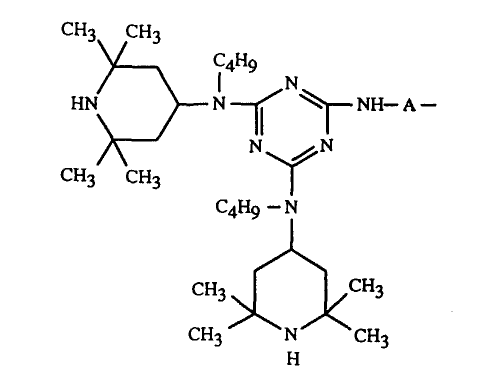 bedeuten.

Bedeuten etwaige Substituenten C₁-C₁₂ Alkyl, so stellen sie beispielsweise Methyl, Ethyl, n-Propyl, n-Butyl, sek.-Butyl, tert-Butyl, n-Hexyl, n-Octyl, 2-Ethylhexyl, n-Nonyl, n-Decyl, n-Undecyl oder n-Dodecyl dar.

Bedeuten etwaige Substituenten C₁-C₄ Hydroxyalkyl, so stellen sie z.B. 2-Hydroxyethyl, 2-Hydroxypropyl, 3-Hydroxypropyl, 2-Hydroxybutyl oder 4-Hydroxybutyl dar.

Bedeutet A C₂-C₆ Alkylen, so stellt es beispielsweise Ethylen, Propylen, 2,2-Dimethylpropylen, Tetramethylen oder Hexamethylen dar.

Stellen R₁₁ und R₁₂ zusammen C₄-C₅-Alkylen oder -Oxaalkylen dar, so bedeutet dies z.B. Tetramethylen, Pentamethylen oder 3-Oxapentamethylen.

Beispiele für sterisch gehinderte Amine der Formel (VI) sind die Verbindungen der folgenden Formeln: 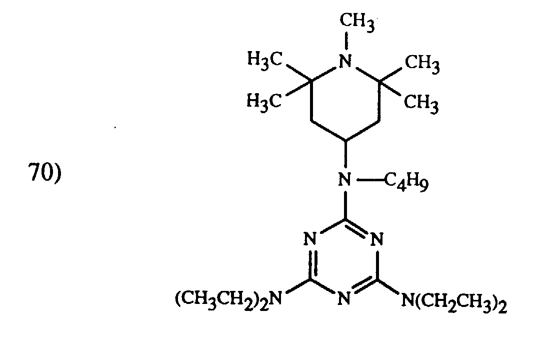 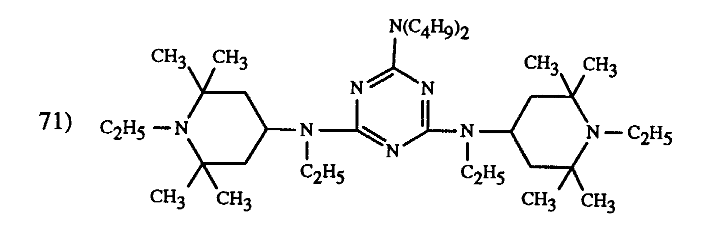 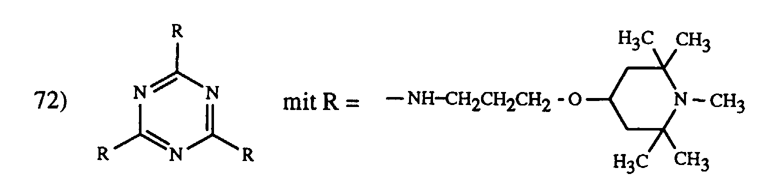 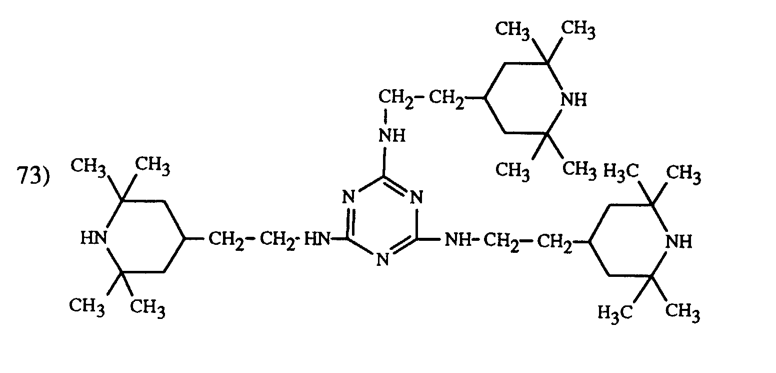 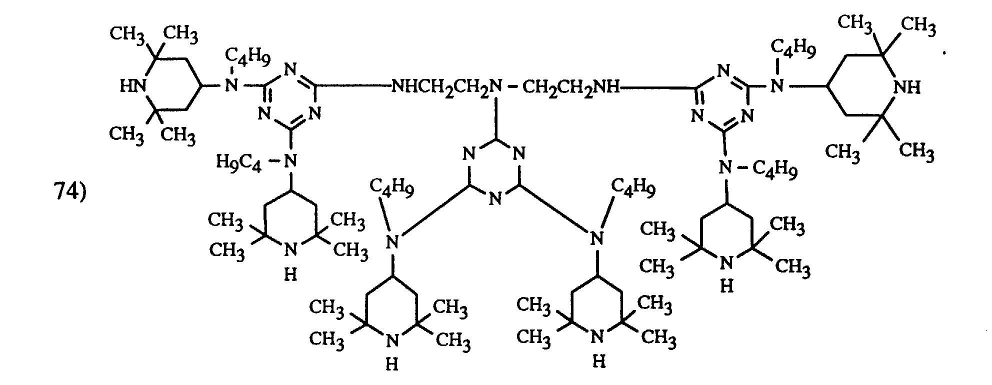 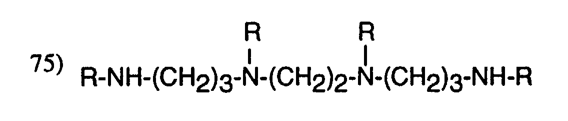 mit 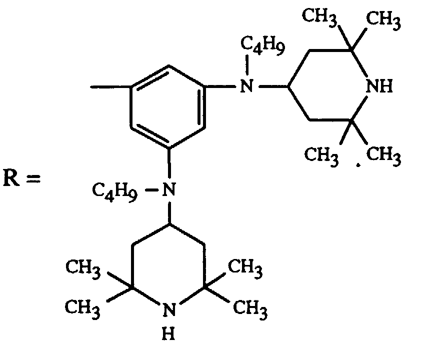 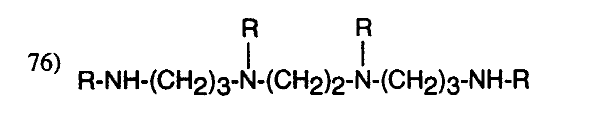 mit 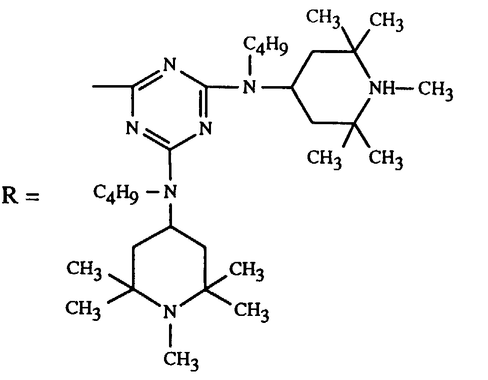 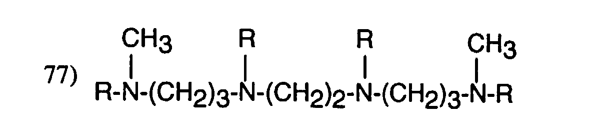 mit

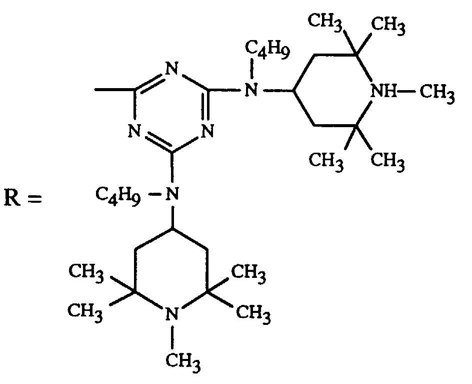

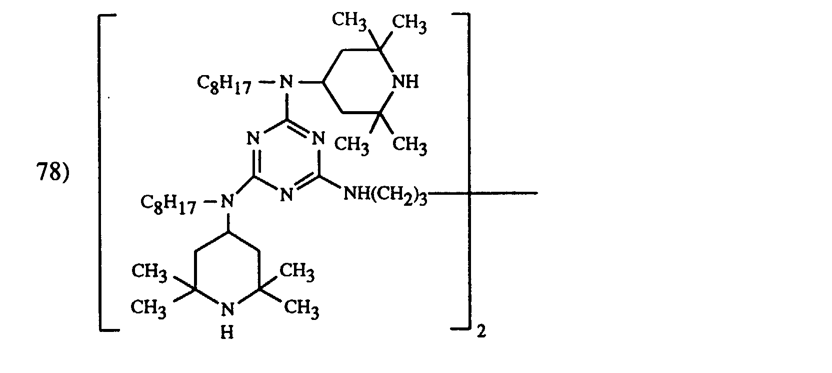

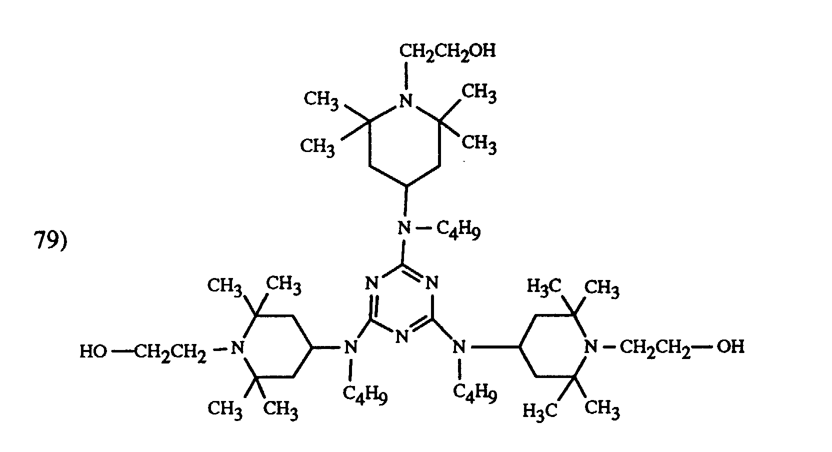

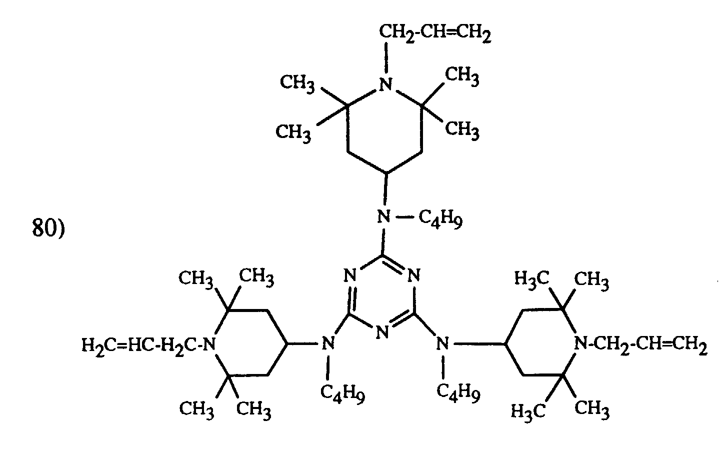

f) Oligomere oder polymere Verbindungen, deren wiederkehrende Struktureinheit einen 2,2,6,6-Tetraalkylpiperidinrest der Formel (I) enthält, insbesondere Polyester, Polyäther, Polyamide, Polyamine, Polyurethane, Polyharnstoffe, Polyaminotriazine,
Poly(meth)acrylate, Poly(meth)acrylamide und deren Copolymeren, die solche Reste enthalten.

Beispiele für sterisch gehinderte Amine dieser Klasse sind die Verbindungen der folgenden Formeln, wobei m eine Zahl von 2 bis etwa 200 bedeutet.

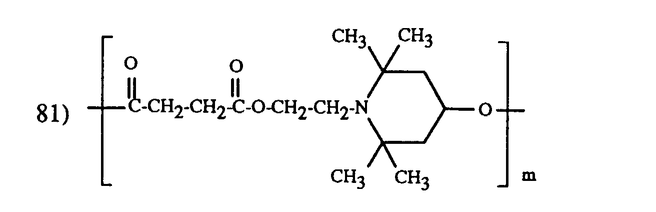

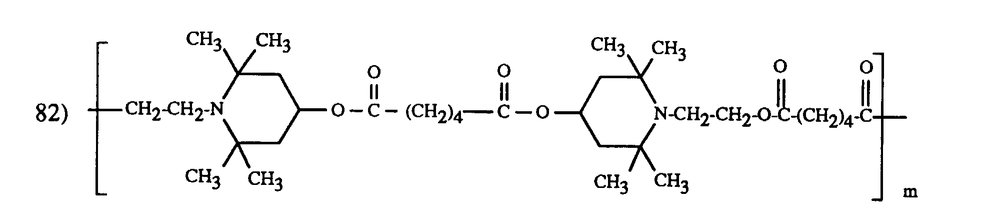

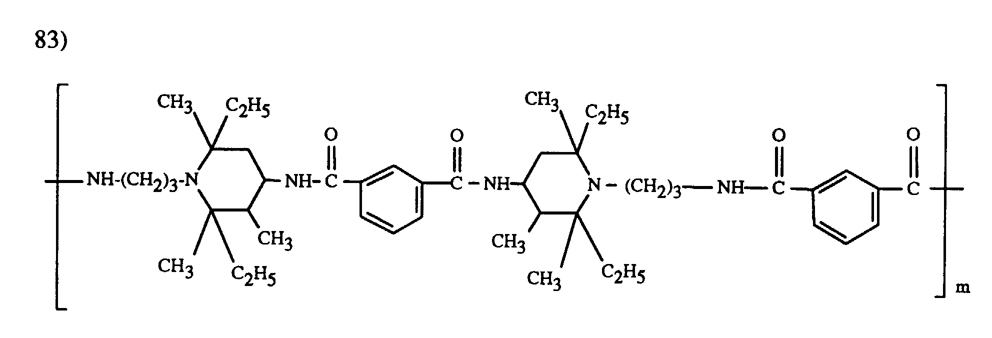

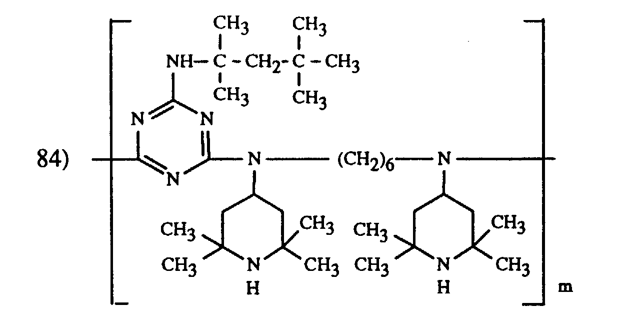

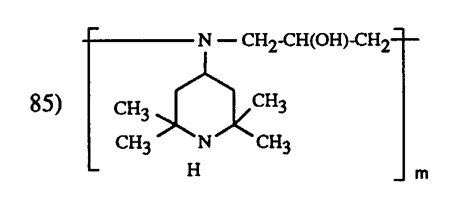

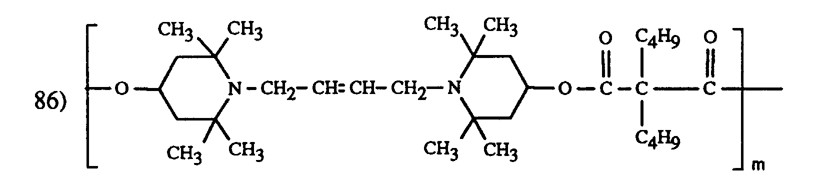

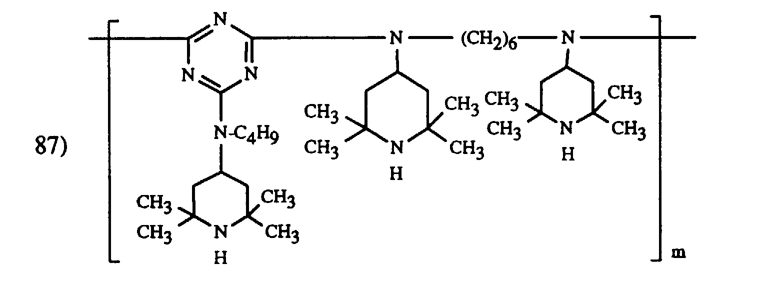

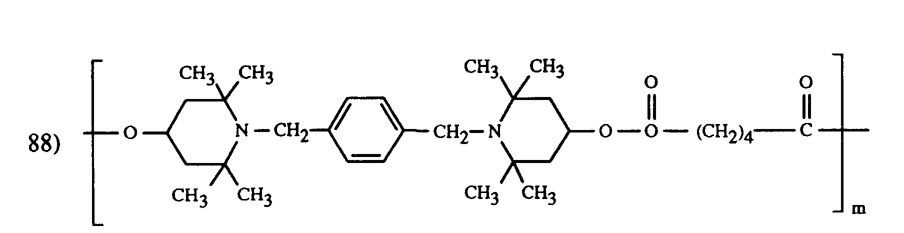

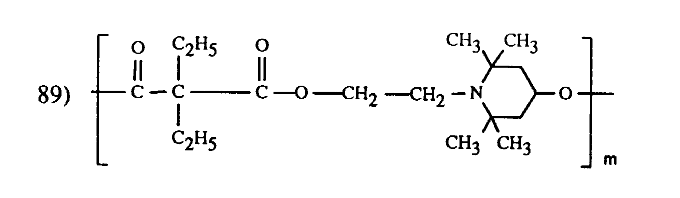

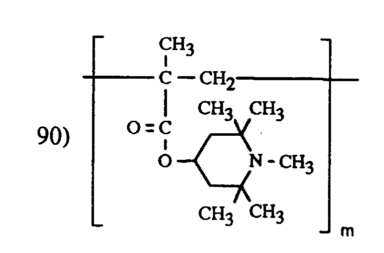

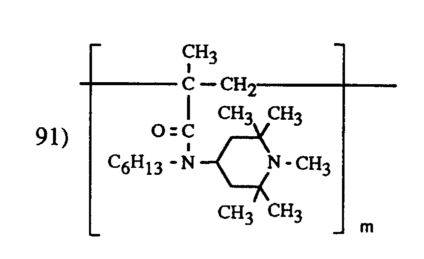

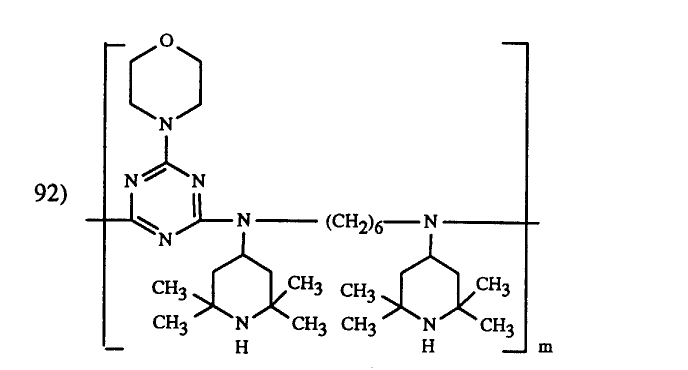

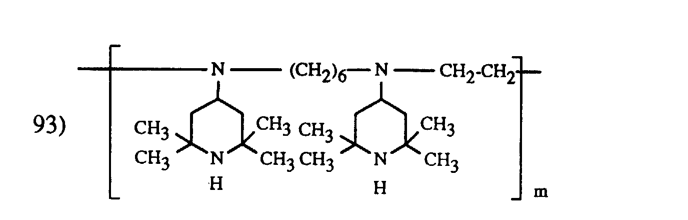

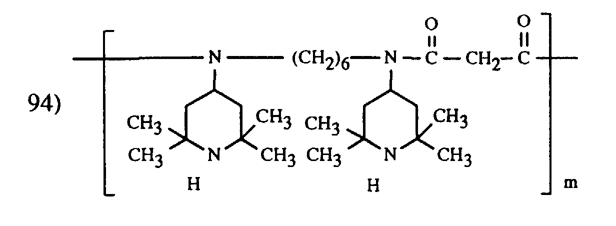

Die Verbindungen der Formel (II) - (VI) sind bekannt oder können nach an sich bekannten Verfahren hergestellt werden. Die Verbindungen der Formel (II) sind z.B. aus US-A-3 840 494 bekannt und können nach den dort beschriebenen Verfahren hergestellt werden.

Bei den oligomeren Verbindungen sind solche mit einem niederen Molekulargewicht (< 700) bevorzugt.

Als bevorzugte UV-Absorber werden erfindungsgemäss folgende Verbindungen verwendet:
a) 2-(2'-Hydroxyphenyl)-benzotriazole, wie z.B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Di-tert-butyl-2'-hydroxyphenyl)-5-chlor-benzotriazol, 2-(3'-tert-Butyl-2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)-benzotriazol, 2-(3',5'-Bis-(α,α-dimethylbenzyl)-2'-hydroxyphenyl)-benzotriazol, Mischung aus 2-(3'-tert-Butyl-2'-hydroxy-5'-(2-octyloxycarbonylethyl)phenyl)-5-chlor-benzotriazol, 2-(3'-tert-Butyl-5'-[2-(2-ethylhexyloxy)-carbonylethyl]-2'-hydroxyphenyl)-5,chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, und 2-(3'-tert-Butyl-2'-hydroxy-5'-(2-isooctyloxycarbonylethyl)phenyl-benzotriazol, 2,2'-Methylen-bis[4-(1,1,3,3-tetramethylbutyl)-6-benzotriazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300; [R-CH₂CH₂-COO(CH₂)₃ 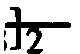 mit R = 3'-tert-Butyl-4'-hydroxy-5'-2H-benzotriazol-2-yl-phenyl.
b) 2 -Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
c) Ester von gegebenenfalls substituierten Benzoesäuren, wie z.B. 4-tert-Butyl-phenylsalicylat, Phenylsalicylat, Octylphenyl-salicylat, Dibenzoylresorcin, Bis-(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.
d) 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-[2-hydroxy-4-(2-hydroxy-3-butyloxy-propyloxy)phenyl]-4,6-bis(2,4dimethylpheny))-1,3,5-triazin, 2-[2-hydroxy-4-(2-hydroxy-3-octyloxy-propyloxy)phenyl]-4,6-bis(2,4-dimethylphenyl)-1,3,5-triazin.

Als bevorzugte Antioxidantien werden erfindungsgemäss folgende Verbindungen verwendet:
a) Alkylierte Monophenole, z.B. 2,6-Di-tert-butyl-4-methylphenol, 2-butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol und Mischungen davon.
b) Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.
c) Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-2,5-Di-tert-butyl-4-hydroxyanisol, 3,5-Di-tert-butyl-4-hydroxyanisol, 3,5-Di-tert-butyl-4-hydroxyphenyl-stearat, Bis-(3,5-di-tert-butyl-4-hydroxyphenyl)adipat.
d) Hydroxylierte Thiodiphenylether, z.B. 2,2'-Thio-bis-(6-tert-butyl-4-methylphenol), 2,2'-Thio-bis-(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4'-Bis-(2,6-dimethyl-4-hydroxyphenyl)-disulfid.
e) Alkyliden-Bisphenole, z.B. 2,2'-Methylen-bis-(6-tert-butyl-4-methylphenol), 2,2'-Methylen-bis-(6-tert-butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert-butylphenol), 2,2'-Ethyliden-bis-(4,6-di-tert-butylphenol), 2,2'-Ethyliden-bis-(6-tert-butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert-butylphenol), 4,4'-Methylen-bis-(6-tert-butyl-2-methylphenol), 1,1-Bis-(5-tert-butyl-4-hydroxy-2-methylphenyl)butan, 2,6-Bis-(3-tert-butyl-5-methyl-2-hydroxybenzyl)-4-methylphenol, 1,1,3-Tris-(5-tert-butyl-4-hydroxy-2-methylphenyl)-butan, 1,1-Bis-(5-tert-butyl-4-hydroxy-2-methylphenyl)-3-n-dodecylmercaptobutan, Ethylenglycol-bis-[3,3-bis-(3'-tert-butyl-4'-hydroxyphenyl)-butyrat], Bis-(3-tert-butyl-4-hydroxy-5-methyl-phenyl)-dicyclopentadien, Bis-[2-(3'-tert-butyl-2'-hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis-(3,5-di-tert-butyl-4-hydroxyphenyl)-propan, 2,2-Bis-(5-tert-butyl-4-hydroxy-2-methylphenyl)-4-n-dodecylmercaptobutan, 1,1,5,5-Tetra-(5-tert-butyl-4-hydroxy-2-methylphenyl)-pentan.
f) O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tris-(3,5-di-tert-butyl-4-hydroxybenzyl)-amin, Bis-(4-tert-butyl-3-hydroxy-2,6-dimethylbenzyl)-di-thioterephthalat, Bis-(3,5-di-tert-butyl-4-hydroxybenzyl)-sulfid, Isooctyl-3,5-di-tert-butyl-4-hydroxybenzyl-mercaptoacetat.
g) Hydroxybenzylierte Malonate, z.B. Dioctadecyl-2,2-bis-(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis-(3,5-di-tert-butyl-4-hydroxybenzyl)-malonat, Di-[4-(1,1,3,3-tetramethylbutyl)-phenyl]-2,2-bis-(3,5-di-tert-butyl-4-hydroxybenzyl)-malonat.
h) Hydroxybenzyl-Aromaten, z.B. 1,3,5-Tris-(3,5-di-tert-butyl-4-hydroxybenzyl)-2,4,6-trimethylbenzol, 1,4-Bis-(3,5-di-tert-butyl-4-hydroxybenzyl)-2,3,5,6-tetramethylbenzol, 2,4,6-Tris-(3,5-di-tert-butyl-4-hydroxybenzyl)-phenol.
i) Triazinverbindungen, z.B. 2,4-Bis-octylmercapto-6-(3,5-di-tert-butyl-4-hydroxyanilino)-1,3,5-triazin, 2-Octylmercapto-4,6-bis-(3,5-di-tert-butyl-4-hydroxyanilino)-1,3,5-triazin, 2-Octylmercapto-4,6-bis-(3,5-di-tert-butyl-4-hydroxyphenoxy)-1,3,5-triazin, 2,4,6-Tris-(3,5-di-tert-butyl-4-hydroxyphenoxy)-1,2,3-uiazin, 1,3,5-Tris-(3,5-di-tert-butyl-4-hydroxybenzyl)-isocyanurat, 1,3,5-Tris-(4-tert-butyl-3-hydroxy-2,6-dimethylbenzyl)-isocyanurat, 2,4,6-Tris-(3,5-di-tert-butyl-4-hydroxyphenylethyl)-1,3,5-triazin, 1,3,5-Tris-(3,5-di-tert-butyl-4-hydroxyphenylpropionyl)-hexahydro-1,3,5-triazin, 1,3,5-Tris-(3,5-dicyclohexyl-4-hydroxybenzyl)-isocyanurat.
j) Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.
k) Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
l) Ester der β-(3,5-Di-tert-butyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
m) Ester der β-(5-tert-Butyl-4-hydroxy-3-methylphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo[2.2.2]-octan.
n) Ester der β-(3,5-Dicyclohexyl-4-hydroxyphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
o) Ester der 3,5-Di -tert-butyl-4-hydroxyphenylessigsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
p) Amide der β-(3,5-Di-tert-butyl-4-hydroxyphenyl)-propionsäure, wie z.B. N,N'-Bis-(3,5-di-tert-butyl-4-hydroxyphenylpropionyl)-hexamethylendimnin, N,N'-Bis-(3,5-di-tert-butyl-4-hydroxyphenylpropionyl)-uimethylendiamin, N,N'-Bis-(3,5-di-tert-butyl-4-hydroxyphenylpropionyl)-hydrazin.

Die erfindungsgemässen Handelsformen der sterisch gehinderten Amine, UV-Absorber und Antioxidantien enthalten neben diesen Verbindungen als Emulgator bzw. Dispergator einen Polyalkohol, der ganz oder teilweise mit einer Fettsäure verestert ist.

Als Polyalkohole kommen z.B. Glykol, Diglykol, Alkylen- oder Dialkylenglykole, Sorbitan, Sorbit, Mannit, Xylit, Pentaerythrit, Diglycerin, Glycerin und Glycerylsorbit in Frage.

Geeignete Fettsäuren sind beispielsweise Fettsäuren mit 6 bis 25 Kohlenstoffatomen, wie z.B. Capryl-, Caprin-, Laurin-, Myristin-, Palmitin-, Stearin-, Arachin-, Behen-, Kokosfett-(C₈-C₁₈), Decen-, Dodecen-, Tetradecen-, Hexadecen-, Oel-, Linol-, Linolen-, Eikosen-, Dokosen- oder Clupanodonsäure.

Bevorzugte Verbindungen aus der Gruppe der ganz oder teilweise mit Fettsäuren veresterten Polyalkohole sind Sorbitan, Sorbit, Mannit, Xylit und Pentaerythrit, die mit 1 bis 3 Mol einer Kokosfett-(C₈-C₁₈)säure, insbesondere Laurin-, Palmitin-, Stearin-, Oel-, Linol- oder Linolensäure verestert sind. Besonders bevorzugt ist mit 1 bis 3, insbesondere ca. 1 mol Oelsäure verestertes Sorbitan.

Ausserdem enthalten die erfindungsgemässen Handelsformen der sterisch gehinderten Amine, UV-Absorber und Antioxidantien als weiteren Emulgator bzw. Dispergator ein Umsetzungsprodukt aus einem Polyalkohol, der ganz oder teilweise mit einer Fettsäure verestert ist, mit einem Alkylenoxid.

Bei den Polyalkoholen und Fettsäuren handelt es sich um die vorstehend aufgeführten Verbindungen und als Alkylenoxide kommen vor allem Propylenoxid und insbesondere Ethylenoxid in Betracht.

Vorzugsweise werden Umsetzungsprodukte aus einem Mol Polyalkohol, der ganz oder teilweise mit einer Fettsäure verestert ist, mit 5 bis 200 Mol, insbesondere 5 bis 40 Mol Ethylenoxid verwendet.

Als besonders geeignet haben sich Umsetzungsprodukte aus mit 1 bis 3, insbesondere ca. 1 Mol Oelsäure verestertem Sorbitan mit 5 bis 40 Mol Ethylenoxid erwiesen.

Bevorzugte erfindungsgemässe Handelsformen von sterisch gehinderten Aminen enthalten
a) 75 bis 95 Gew. % eines wasserunlöslichen sterisch gehinderten Amins sowie
b) 25 bis 5 Gew. % eines Gemisches aus
b1) einem Polyalkohol, der ganz oder teilweise mit einer Fettsäure verestert ist und
b2) einem Umsetzungsprodukt aus einem Polyalkohol, der ganz oder teilweise mit einer Fettsäure verestert ist, und einem Alkylenoxid, wobei das Verhältnis der Komponenten b1) : b2) zwischen 3 : 7 und 7 : 3 liegt.

Bevorzugte erfindungsgemässe Handelsformen von UV-Absorbern enthalten
a) 75 bis 95 Gew. % eines wasserunlöslichen UV-Absorbers sowie
b) 25 bis 5 Gew. % eines Gemisches aus
b1) einem Polyalkohol, der ganz oder teilweise mit einer Fettsäure verestert ist und
b2) einem Umsetzungsprodukt aus einem Polyalkohol, der ganz oder teilweise mit einer Fettsäure verestert ist, und einem Alkylenoxid, wobei das Verhältnis der Komponenten b1): b2) zwischen 9 : 1 und 5 : 5 liegt.

Bevorzugte erfindungsgemässe Handelsformen von Antioxidantien enthalten
a) 75 bis 95 Gew. % eines wasserunlöslichen Antioxidans sowie
b) 25 bis 5 Gew. % eines Gemisches aus
b1) einem Polyalkohol, der ganz oder teilweise mit einer Fettsäure verestert ist und
b2) einem Umsetzungsprodukt aus einem Polyalkohol, der ganz oder teilweise mit einer Fettsäure verestert ist, und einem Alkylenoxid, wobei das Verhältnis der Komponenten b1) : b2) zwischen 1: 9 und 5 : 5 liegt.

Als weitere Zusätze können die erfindungsgemässen Handelsformen z.B. noch Wasser, Stabilisatoren, Verdünnungsmittel, Fettungsmittel, den Griff beeinflussende Mittel, Acrylharze, Polyurethane, Flammschutzmittel oder Emulsionsträger enthalten. Ausserdem können die erfindungsgemässen Handelsformen oder die erfindungsgemässen wässrigen Flotten auch Hydrophobierungsmittel wie z.B. Fluorkohlenstoffe oder Fluorcarbonharze enthalten, beispielsweise perfluorierte Alkyliodide oder Perfluoralkyl-Monoiodperfluoralkylether mit mit 5 bis 18, vorzugsweise 7 bis 14 C-Atomen.

Die erfindungsgemässen Handelsformen sind geeignet zum Stabilisieren gegen thermische und photochemische Zersetzung für eine Vielzahl von Substraten, z.B. für textile Beschichtungen aus Polyurethanen, Acrylaten, Silikon-Acrylaten oder Styrol enthaltenden Copolymeren, für Leder-Imitate aus Polyester/Polyurethan oder Polyamid/Polyurethan, für Polypropylen sowie vor allem für Leder, vorzugsweise für Anilin-, Nubuk- und Velourleder sowie leicht zugerichtete Narbenleder für Polster und Bekleidung.

Die erfindungsgemässen Handelsformen können problemlos in wässrige Latices oder direkt in wässrige Flotten eingearbeitet werden und lassen sich in einem weiten pH-Bereich verwenden, z.B. von ca. 6 bis 12.

Dabei kann die Applikation der wässrigen Flotten auf ungefärbtes oder gefärbtes Material erfolgen, und zwar vor, während oder nach dem Färben, z.B. nach einem Ausziehverfahren bei Flottenverhältnissen von 1:5 bis 1:200, vorzugsweise 1:10 bis 1:50, z.B. in einem Zirkulationsapparat oder einer Haspelkufe. Es ist auch möglich, die genannten Substrate in einer Nachbehandlung zu stabilisieren, indem man die erfindungsgemässen Handelsformen, enthaltend sterisch gehindertes Amin, UV-Absorber und/oder Antioxidans, unmittelbar nach dem Färbeprozess dem erschöpften Färbebad in der Färbeflotte zugibt.

Die wässrigen Flotten, enthaltend Emulgator bzw. Dispergator sowie sterisch gehindertes Amin, UV-Absorber und/oder Antioxidans, können aber auch kontinuierlich mittels Niedrigauftragssystemen oder Heissapplikationssystemen appliziert werden.

Vorzugsweise werden die wässrigen Flotten, enthaltend Emulgator bzw. Dispergator sowie sterisch gehindertes Amin, UV-Absorber und/oder Antioxidans, im Spritzauftragsverfahren oder im Walzenauftragsverfahren auf das zu behandelnde Substrat aufgebracht.

Man kann aber auch die erfindungsgemässen Handelsformen, enthaltend Emulgator bzw. Dispergator sowie sterisch gehindertes Amin, UV-Absorber und/oder Antioxidans, in übliche Lederpflegemittel auf wässriger Basis einarbeiten, z.B. in Cremes, Gele oder Sprays.

Die EP-A- 0 378 054 beschreibt ein Verfahren zur fotochemischen Stabilisierung von Lederimitaten und die DE-A-41 31 926 ein Verfahren zum Nachbehandeln von gefärbten Substarten mit Verbindungen, enthaltend eine sterisch gehinderte Aminogruppe.

Die folgenden Beispiele veranschaulichen die Erfindung. Teile bedeuten Gewichtsteile und Prozente Gewichtsprozente. Die Prozente, betreffend die Zusätze der einzelnen Behandlungs- bzw. Färbebäder, beziehen sich, wenn nicht anders vermerkt, auf das Substrat. Die Temperaturen sind in Grad Celsius angegeben.

Beispiel 1: Durch Vermischen der Komponenten bei Raumtemperatur stellt man eine flüssige Handelsform folgender Zusammensetzung her:
90 % des sterisch gehinderten Amins der Formel 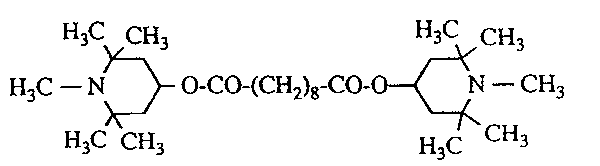
5 % Sorbitanmonooleat und
5 % des Umsetzungsproduktes von ca. 20 Mol Ethylenoxid und 1 Mol Sorbitanmonooleat.

Die erhaltene Handelsform ist lagerstabil und sehr gut in Wasser emulgierbar.

Beispiel 2: Durch Vermischen der Komponenten bei Raumtemperatur stellt man eine flüssige Handelsform folgender Zusammensetzung her:
90 % des UV-Absorbers der Formel 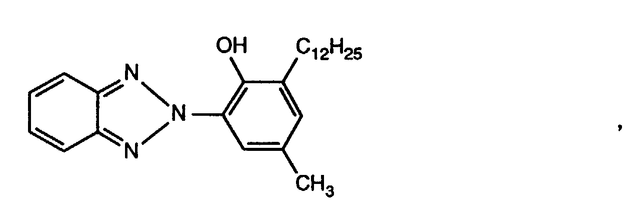
3 % Sorbitanmonooleat und
7 % des Umsetzungsproduktes von ca. 20 Mol Ethylenoxid und 1 Mol Sorbitanmonooleat.

Die erhaltene Handelsform ist lagerstabil und sehr gut in Wasser emulgierbar.

Beispiel 3: Durch Vermischen der Komponenten bei Raumtemperatur stellt man eine flüssige Handelsform folgender Zusammensetzung her:
90 % des Antioxidans der Formel 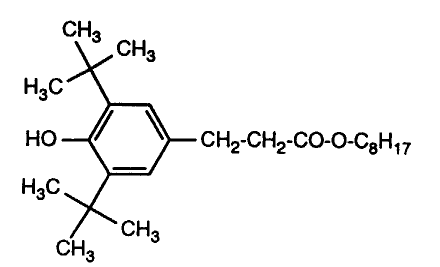
7 % Sorbitanmonooleat und
3 % des Umsetzungsproduktes von ca. 20 Mol Ethylenoxid und 1 Mol Sorbitanmonooleat.

Die erhaltene Handelsform ist lagerstabil und sehr gut in Wasser emulgierbar.

Beispiel 4: Durch Vermischen der Komponenten bei Raumtemperatur stellt man eine flüssige Handelsform folgender Zusammensetzung her:
40 % des sterisch gehinderten Amins aus Beispiel 1,
30 % des UV-Absorbers aus Beispiel 2,
20 % des Antioxidans aus Beispiel 3,
5 % Sorbitanmonooleat und
5 % des Umsetzungsproduktes von ca. 20 Mol Ethylenoxid und 1 Mol Sorbitanmonooleat.

Die erhaltene Handelsform ist lagerstabil und sehr gut in Wasser emulgierbar.

Beispiel 5: Durch Vermischen der Komponenten bei Raumtemperatur stellt man eine wässrige Appretur für die Behandlung von Leder folgender Zusammensetzung her:
80 Teile der im Beispiel 1 beschriebenen Handelsform des sterisch gehinderten Amins,
70 Teile der im Beispiel 2 beschriebenen Handelsform des UV-Absorbers,
50 Teile der im Beispiel 3 beschriebenen Handelsform des Antioxidans und
800 Teile Wasser.

Beispiel 6: 100 Teile chromgegerbtes Rindleder (Falzgewicht) werden 15 Minuten lang in 300 Teilen Wasser bei 30°C gewaschen und anschliessend 60 Minuten in einer aus 300 Teilen Wasser, 2 Teilen Neutralisationsmittel (Na-Salze aromatischer Sulfosäuren und aliphatischer Dicarbonsäuren) und 0,5 Teilen Natriumbicarbonat bestehenden Flotte bei 30°C neutralisiert. Anschliessend folgt eine 15 Minuten dauernde Waschoperation in 300 Teilen Wasser bei Raumtemperatur.

Das derart behandelte Leder wird nun in einer Flotte aus 300 Teilen Wasser sowie 2,01 Teilen der Farbstoffmischung, bestehend aus 0,67 Teilen des gelben Farbstoffes der Formel 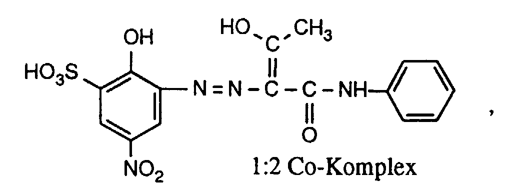 0,67 Teilen des roten Farbstoffes der Formel 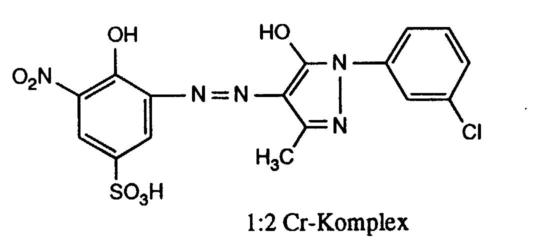 und 0,67 Teilen des blauen Farbstoffes der Formel 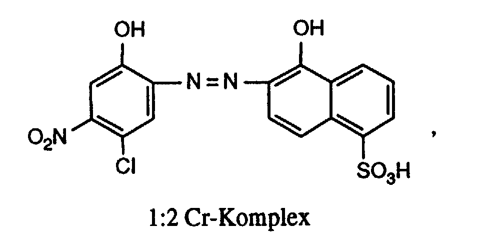 bei 50°C gefärbt. Nach einer Färbedauer von 30 Minuten erfolgt ein Zusatz von 3 Teilen eines synthetischen Fettungsmittels (Zubereitung auf Basis von sulfonierten aliphatischen Kohlenwasserstoffen, Fettsäuren und deren Derivaten) und nach weiteren 30 Minuten eine Zugabe von 1 Teil 85 %iger Ameisensäure. Nach dem Ansäuern wird die Behandlung noch 30 Minuten bei 50°C fortgesetzt. Anschliessend wird in kaltem Wasser gespült und fertiggestellt.

Das erhaltene braun gefärbte, getrocknete Leder wird anschliessend mit der im Beispiel 5 beschriebenen Appretur zweimal kreuzweise gespritzt (zweimal ca. 75 ml/m²) und danach getrocknet und wie üblich fertiggestellt. Die erhaltene egale braune Färbung zeichnet sich gegenüber der Färbung gleicher Farbtiefe ohne Nachbehandlung mit sterisch gehindertem Amin, UV-Absorber und Antioxidans durch deutlich verbesserte Echtheiten, vor allem Licht- und Reibechtheit aus.

Beispiel 7: 100 Teile chromgegerbtes Rindleder (Falzgewicht) werden 15 Minuten lang in 300 Teilen Wasser bei 30°C gewaschen und anschliessend 60 Minuten in einer aus 300 Teilen Wasser, 2 Teilen Neutralisationsmittel (Na- Salze aromatischer Sulfosäuren und aliphatischer Dicarbonsäuren) und 0,5 Teilen Natriumbicarbonat bestehenden Flotte bei 30°C neutralisiert. Anschliessend folgt eine 15 Minuten dauernde Waschoperation in 300 Teilen Wasser bei Raumtemperatur.

Das derart behandelte Leder wird nun in einer frisch angesetzten Flotte aus 300 Teilen Wasser und 0,734 Teilen der Farbstoffmischung, bestehend aus 0,477 Teilen des gelben Farbstoffes der Formel 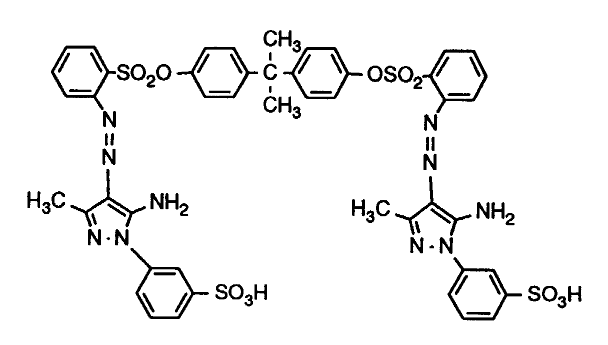 0,077 Teilen des blauen Farbstoffes der Formel 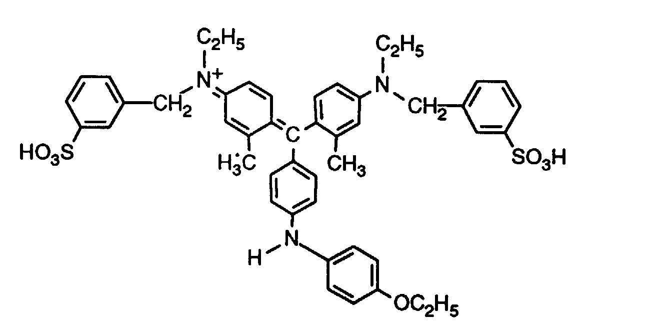 und 0,180 Teilen des roten Farbstoffs der Formel 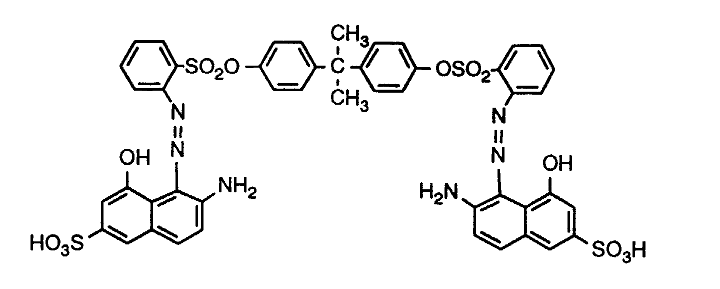 30 Minuten bei 50°C gefärbt. Dann werden der Färbeflotte 3 Teile eines synthetischen Fettungsmittels (Zubereitung auf Basis von sulfonierten aliphatischen Kohlenwasserstoffen, Fettsäuren und deren Derivate) und nach weiteren 30 Minuten 0,5 Teile 85 %ige Ameisensäure zugesetzt. Man färbt noch 30 Minuten bei unveränderter Temperatur weiter und stellt das gefärbte Leder nach dem Spülen wie üblich fertig.

Auf das erhaltene mittelbraun gefärbte, getrocknete Leder wird anschliessend die im Beispiel 5 beschriebene Appretur zweimal mittels Rasterwalze aufgetragen (Flottenaufnahme ca. 150 ml/m²) und danach wird das Leder getrocknet und wie üblich fertiggestellt. Die erhaltene egale braune Färbung zeichnet sich gegenüber der Färbung gleicher Farbtiefe ohne Nachbehandlung mit sterisch gehindertem Amin, UV-Absorber und Antioxidans durch deutlich verbesserte Echtheiten, vor allem Licht- und Reibechtheit aus.

Beispiel 8: 100 Teile ungefärbtes, nachgegerbtes, weisses, getrocknetes Leder wird mit einer Appretur, bestehend aus
75 Teilen der im Beispiel 1 beschriebenen Handelsform des sterisch gehinderten Amins,
75 Teilen der im Beispiel 3 beschriebenen Handelsform des Antioxidans und
850 Teilen Wasser,
zweimal kreuzweise gespritzt (zweimal ca. 100 ml/m²) und danach getrocknet und wie üblich fertiggestellt. Das erhaltene Leder zeichnet sich gegenüber unbehandeltem Leder durch eine deutlich verbesserte Lichtechtheit aus und zeigt auch bei langer Lagerung unter natürlichem Licht deutlich weniger Vergilbung.

Beispiel 9: 100 Teile chromgares Bekleidungsveloursleder (Trockengewicht) werden bei 50°C in einer Lösung von 1000 Teilen Wasser und 2 Teilen 24 %igem Ammoniak während 60 Minuten aufgewalkt. Danach folgt ein Waschprozess von 15 Minuten Dauer in 1000 Teilen Wasser von 50°C.

Nach diesen vorbereitenden Operationen wird das Leder in einer Flotte aus 1000 Teilen Wasser, 2 Teilen Ammoniak 24%ig und 13 Teilen einer flüssigen Handelsform, enthaltend 15 % des Farbstoffes der Formel 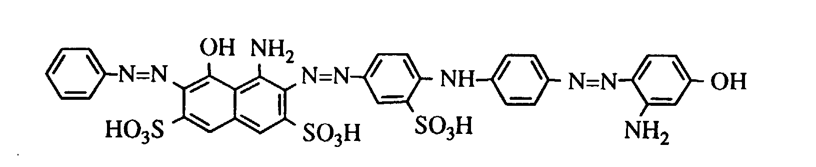 bei 50°C gefärbt.

Nach einer Färbedauer von 60 Minuten wird mit 4 Teilen 85 %iger Ameisensäure angesäuert und hierauf noch 20 Minuten weitergefärbt.

Die Fertigstellung des gefärbten Leders erfolgt nach einer Behandlung in frischem Bad mit 1000 Teilen Wasser, 2,5 Teilen eines Kondensationsproduktes aus Formaldehyd, Dicyandiamid, Ammoniumchlorid und Ethylendiamin sowie 0,5 Teilen 85 %iger Ameisensäure während 45 Minuten bei 50°C. Das erhaltene Leder ist schwarz gefärbt.

Das getrocknete Leder wird anschliessend mit einer Appretur, bestehend aus 100 Teilen der im Beispiel 1 beschriebenen Handelsform des sterisch gehinderten Amins, 100 Teilen der im Beispiel 2 beschriebenen Handelsform des UV-Absorbers und 800 Teilen Wasser, zweimal kreuzweise gespritzt (zweimal ca. 75 ml/m²) und danach getrocknet und wie üblich fertiggestellt. Die erhaltene egale schwarze Färbung zeichnet sich gegenüber der Färbung gleicher Farbtiefe ohne Nachbehandlung mit sterisch gehindertem Amin und UV-Absorber durch deutlich verbesserte Echtheiten, vor allem Licht- und Reibechtheit aus.

Beispiel 10: Man verwendet Leder, welches gemäss den Angaben in den ersten beiden Abschnitten des Beispiels 6 gefärbt wurde.

Auf das erhaltene braun gefärbte, getrocknete Leder wird anschliessend eine Appretur, enthaltend
70 Teile der im Beispiel 1 beschriebenen Handelsform des sterisch gehinderten Amins,
50 Teile der im Beispiel 2 beschriebenen Handelsform des UV-Absorbers,
30 Teile der im Beispiel 3 beschriebenen Handelsform des Antioxidans,
5 Teile eines handelsüblichen Alginatverdickers und
845 Teile Wasser,
mittels Rasterwalze aufgetragen (Flottenaufnahme ca. 200 ml/m²) und danach wird das Leder getrocknet und wie üblich fertiggestellt. Die erhaltene egale braune Färbung zeichnet sich gegenüber der Färbung gleicher Farbtiefe ohne Nachbehandlung mit sterisch gehindertem Amin, UV-Absorber und Antioxidans durch deutlich verbesserte Echtheiten, vor allem Licht- und Reibechtheit aus.

Beispiel 11: Durch Vermischen der Komponenten bei Raumtemperatur stellt man eine flüssige Handelsform folgender Zusammensetzung her:
90 % des sterisch gehinderten Amins 1-Benzyl-4-hydroxy-2,2,6,6-tetramethylpiperidin,
5 % Sorbitanmonooleat und
5 % des Umsetzungsproduktes von ca. 20 Mol Ethylenoxid und 1 Mol Sorbitanmonooleat.

Die erhaltene Handelsform ist lagerstabil und sehr gut in Wasser emulgierbar.

Beispiel 12: Durch Vermischen der Komponenten bei Raumtemperatur stellt man eine flüssige Handelsform folgender Zusammensetzung her:
90 % des sterisch gehinderten Amins
1,2,2,6,6-Pentamethylpiperidin-4-yl-β-(3,5-di-tert.-butyl-4-hydroxyphenyl)-propionat,
5 % Sorbitanmonooleat und
5 % des Umsetzungsproduktes von ca. 20 Mol Ethylenoxid und 1 Mol Sorbitanmonooleat.

Die erhaltene Handelsform ist lagerstabil und sehr gut in Wasser emulgierbar.

Beispiel 13: Durch Vermischen der Komponenten bei Raumtemperatur stellt man eine flüssige Handelsform folgender Zusammensetzung her:
90 % des sterisch gehinderten Amins Di-(2,2,6,6-tetramethylpiperidin-4-yl)-sebacat
5 % Sorbitanmonooleat und
5 % des Umsetzungsproduktes von ca. 20 Mol Ethylenoxid und 1 Mol Sorbitanmonooleat.

Die erhaltene Handelsform ist lagerstabil und sehr gut in Wasser emulgierbar.

Beispiel 14: Durch Vermischen der Komponenten bei Raumtemperatur stellt man eine flüssige Handelsform folgender Zusammensetzung her:
90 % des sterisch gehinderten Amins der Formel 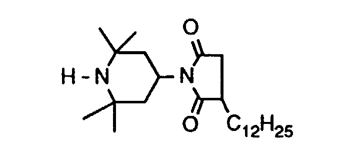
5 % Sorbitanmonooleat und
5 % des Umsetzungsproduktes von ca. 20 Mol Ethylenoxid und 1 Mol Sorbitanmonooleat.

Die erhaltene Handelsform ist lagerstabil und sehr gut in Wasser emulgierbar.

Beispiel 15: Durch Vermischen der Komponenten bei Raumtemperatur stellt man eine flüssige Handelsform folgender Zusammensetzung her:
90 % des sterisch gehinderten Amins der Formel 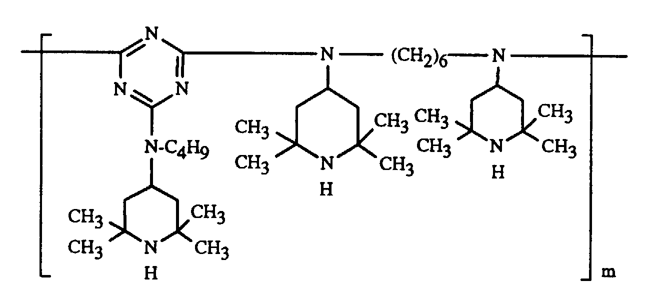
5 % Sorbitanmonooleat und
5 % des Umsetzungsproduktes von ca. 20 Mol Ethylenoxid und 1 Mol Sorbitanmonooleat.

Die erhaltene Handelsform ist lagerstabil und sehr gut in Wasser emulgierbar.

Beispiele 16 bis 20: Man arbeitet wie im Beispiel 5 beschrieben, verwendet jedoch anstelle von 80 Teilen der im Beispiel 1 beschriebenen Handelsform des sterisch gehinderten Amins die gleiche Menge der in den Beispielen 11, 12, 13, 14 oder 15 beschriebenen Handelsform.

Man erhält wässrige Appreturen für die Behandlung von Leder, die wie in den Beispielen 6 und 7 beschrieben eingesetzt werden.

Beispiel 21: Durch Vermischen der Komponenten bei Raumtemperatur stellt man eine flüssige Handelsform folgender Zusammensetzung her:
90 % des Umesterungsproduktes von 2-[3'-tert-Butyl-5'-(2-methoxycarbonylethyl)-2'-hydroxy-phenyl]-benzotriazol mit Polyethylenglycol 300 (UV-Absorber),
3 % Sorbitanmonooleat und
7 % des Umsetzungsproduktes von ca. 20 Mol Ethylenoxid und 1 Mol Sorbitanmonooleat.

Die erhaltene Handelsform ist lagerstabil und sehr gut in Wasser emulgierbar.

Beispiel 22: Durch Vermischen der Komponenten bei Raumtemperatur stellt man eine flüssige Handelsform folgender Zusammensetzung her:
90 % des UV-Absorbers der Formel R-CH₂-CH₂-COO-(CH₂)₆-OOC-CH₂-CH₂-R, worin R 3'-tert-Butyl-4'-hydroxy-5'-2H-benzotriazol-2-yl-phenyl bedeutet,
3 % Sorbitanmonooleat und
7 % des Umsetzungsproduktes von ca. 20 Mol Ethylenoxid und 1 Mol Sorbitanmonooleat.

Beispiele 23 und 24: Man arbeitet wie im Beispiel 5 beschrieben, verwendet jedoch anstelle von 70 Teilen der im Beispiel 2 beschriebenen Handelsform des UV-Absorbers die gleiche Menge der in den Beispielen 21 oder 22 beschriebenen Handelsform.

Man erhält wässrige Appreturen für die Behandlung von Leder, die wie in den Beispielen 6 und 7 beschrieben eingesetzt werden.

Die erhaltene Handelsform ist lagerstabil und sehr gut in Wasser emulgierbar.

Beispiel 25: Man arbeitet wie in den Beispielen 1, 2, 3, 4, 11 bis 15, 21 und 22 beschrieben, ersetzt jedoch die 5 % Sorbitanmonooleat durch die gleiche Menge einer der folgenden Verbindungen:
Sorbitansesquistearat,
Glycerinmonostearat,
Propylenglycolmonomyristat,
Decaglycerinpentaoleat,
Diethylenglycolmonooleat,
Sorbitansesquioleat,
Sorbitantrioleat.

Man erhält lagerstabile Handelsformen, die sehr gut in Wasser dispergierbar sind und in der gleichen Weise verwendet werden können, wie in den Beispielen 5, 6 und 7 beschrieben ist.

Beispiel 26: Man arbeitet wie in den Beispielen 1, 2, 3, 4, 11 bis 15, 21 und 22, ersetzt jedoch die 5 % des Umsetzungsproduktes von ca. 20 Mol Ethylenoxid und 1 Mol Sorbitanmonooleat durch die gleiche Menge einer der folgenden Verbindungen:
Umsetzungsprodukt von ca. 20 Mol Ethylenoxid und 1 Mol Sorbitanmonostearat,
Umsetzungsprodukt von ca. 15 Mol Ethylenoxid und 1 Mol Nonylphenol,
Umsetzungsprodukt von ca. 20 Mol Ethylenoxid und 1 Mol Sorbitanmonoisostearat, Polyethylenglycol(600)monolaurat,
Umsetzungsprodukt von ca. 60 Mol Ethylenoxid und 1 Mol Sorbittetraoleat.

Man erhält lagerstabile Handelsformen, die sehr gut in Wasser dispergierbar sind und in der gleichen Weise verwendet werden können, wie in den Beispielen 5, 6 und 7 beschrieben ist.

Beispiel 27: Durch Vermischen der Komponenten bei Raumtemperatur stellt man eine wässrige Appretur folgender Zusammensetzung her:
70 Teile des sterisch gehinderten Amins aus Beispiel 1,
70 Teile des UV-Absorbers aus Beispiel 2,
30 Teile des Antioxidans aus Beispiel 3,
200 Teile Perfluoroctyliodid und
630 Teile Wasser.

Diese Appretur wird wie in den Beispielen 6 bis 10 beschrieben anstelle der dort verwendeten Appreturen auf Leder aufgebracht und dann getrocknet und fertiggestellt.

Man erhält Leder, das die in diesen Beispielen beschriebenen Eigenschaften aufweist und zusätzlich wasserabweisend ist.

## Patentansprüche

1. Verfahren zur Verbesserung der Beständigkeit von Leder und Lederimitaten gegen den Einfluss von Licht und/oder Wärme, dadurch gekennzeichnet, dass man diese Substrate mit einer wässrigen Emulsion oder Dispersion behandelt, enthaltend einen Emulgator oder Dispergator sowie
a) ein wasserunlösliches sterisch gehindertes Amin,
b) einen wasserunlöslichen UV-Absorber und/oder
c) ein wasserunlösliches Antioxidans sowie
d) gegebenenfalls weitere Zusätze.

2. Verfahren gemäss Anspruch 1, dadurch gekennzeichnet, dass man die Substrate mit einer wässrigen Emulsion behandelt, enthaltend einen Emulgator sowie
a) ein wasserunlösliches sterisch gehindertes Amin,
b) einen wasserunlöslichen UV-Absorber und/oder
c) ein wasserunlösliches Antioxidans sowie
d) gegebenenfalls weitere Zusätze.

3. Wässrige Flotten zur Durchführung der Verfahren gemäss einem der Ansprüche 1 oder 2, dadurch gekennzeichnet, dass sie Wasser, einen Emulgator oder Dispergator sowie
a) ein wasserunlösliches sterisch gehindertes Amin,
b) einen wasserunlöslichen UV-Absorber und/oder
c) ein wasserunlösliches Antioxidans sowie
d) gegebenenfalls weitere Zusätze enthalten.

4. Wässrige Flotten gemäss Anspruch 3, dadurch gekennzeichnet, dass sie Wasser und einen Emulgator sowie
a) ein wasserunlösliches sterisch gehindertes Amin,
b) einen wasserunlöslichen UV-Absorber und/oder
c) ein wasserunlösliches Antioxidans sowie
d) gegebenenfalls weitere Zusätze enthalten.

5. Handelsformen von sterisch gehindertem Amin, dadurch gekennzeichnet, dass sie
a) ein wasserunlösliches sterisch gehindertes Amin,
b) einen Polyalkohol, der ganz oder teilweise mit einer Fettsäure verestert ist,
c) ein Umsetzungsprodukt aus einem Polyalkohol, der ganz oder teilweise mit einer Fettsäure verestert ist, und einem Alkylenoxid, und
d) gegebenenfalls Wasser sowie weitere Zusätze enthalten.

6. Handelsformen von UV-Absorbern, dadurch gekennzeichnet, dass sie
a) einen wasserunlöslichen UV-Absorber,
b) einen Polyalkohol, der ganz oder teilweise mit einer Fettsäure verestert ist,
c) ein Umsetzungsprodukt aus einem Polyalkohol, der ganz oder teilweise mit einer Fettsäure verestert ist, und einem Alkylenoxid, und
d) gegebenenfalls Wasser sowie weitere Zusätze enthalten.

7. Handelsformen von Antioxidantien, dadurch gekennzeichnet, dass sie
a) ein wasserunlösliches Antioxidans,
b) einen Polyalkohol, der ganz oder teilweise mit einer Fettsäure verestert ist,
c) ein Umsetzungsprodukt aus einem Polyalkohol, der ganz oder teilweise mit einer Fettsäure verestert ist, und einem Alkylenoxid, und
d) gegebenenfalls Wasser sowie weitere Zusätze enthalten.

8. Handelsformen gemäss Anspruch 5, dadurch gekennzeichnet, dass sie als sterisch gehindertes Amin eine Verbindung enthalten, die mindestens eine Gruppe der Formel I enthält, 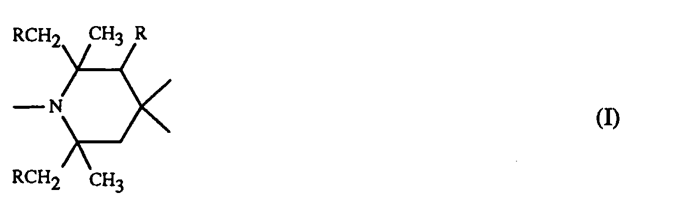 worin R Wasserstoff oder Methyl ist.

9. Handelsformen gemäss Anspruch 8, dadurch gekennzeichnet, dass sie ein sterisch gehindertes Amin der Formel II 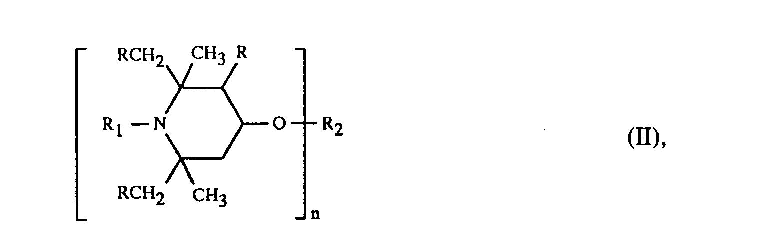 enthalten, worin n eine Zahl von 1 bis 4, R Wasserstoff oder Methyl, R₁ Wasserstoff, Hydroxy, C₁-C₁₂-Alkyl, C₃-C₈ Alkenyl, C₃-C₈ Alkinyl, C₇-C₁₂ Aralkyl, C₁-C₈ Alkanoyl, C₃-C₅ Alkenoyl, Glycidyl, -O-C₁-C₁₂-Alkyl, -O-C₁-C₈-Alkanoyl oder eine Gruppe -CH₂CH(OH)-Z bedeutet, worin Z Wasserstoff, Methyl oder Phenyl ist und R₂, wenn n 1 ist, Wasserstoff, gegebenenfalls durch ein oder mehrere Sauerstoffatome unterbrochenes C₁-C₁₈ Alkyl, Cyanethyl, Benzyl, Glycidyl, einen einwertigen Rest einer aliphatischen, cycloaliphatischen, araliphatischen, ungesättigten oder aromatischen Carbonsäure, Carbaminsäure oder Phosphor enthaltenden Säure oder einen einwertigen Silylrest bedeutet, und worin R₂, wenn n 2 ist, C₁-C₁₂ Alkylen, C₄-C₁₂ Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest bedeutet, wenn n 3 ist, einen dreiwertigen Rest einer aliphatischen, cycloaliphatischen oder aromatischen Tricarbonsäure, einer aromatischen Tricarbaminsäure oder einer Phosphor enthaltenden Säure oder einen dreiwertigen Silylrest bedeutet und wenn n 4 ist, einen vierwertigen Rest einer aliphatischen, cycloaliphatischen oder aromatischen Tetracarbonsäure bedeutet.

10. Handelsformen gemäss Anspruch 9, dadurch gekennzeichnet, dass sie ein sterisch gehindertes Amin der Formel II enthalten, worin n 1 oder 2, R Wasserstoff oder Methyl, R₁ Wasserstoff, C₁-C₄ Alkyl, Allyl, Benzyl, Acetyl oder Acryloyl ist und R₂, wenn n 1 ist, einen Rest einer aliphatischen Carbonsäure mit 2 bis 18 C-Atomen, einer cycloaliphatischen Carbonsäure mit 7 bis 15 C-Atomen, einer α,β-ungesättigten Carbonsäure mit 3 bis 5 C-Atomen oder einer aromatischen Carbonsäure mit 7 bis 15 C-Atomen bedeutet, und, wenn n 2 ist, einen Rest einer aliphatischen Dicarbonsäure mit 2 bis 36 C-Atomen, einer cycloaliphatischen oder aromatischen Dicarbonsäure mit 8 bis 14 C-Atomen oder einer aliphatischen, cycloaliphatischen oder aromatischen Dicarbaminsäure mit 8 bis 14 C-Atomen bedeutet.

11. Handelsformen gemäss Anspruch 8, dadurch gekennzeichnet, dass sie ein sterisch gehindertes Amin der Formel 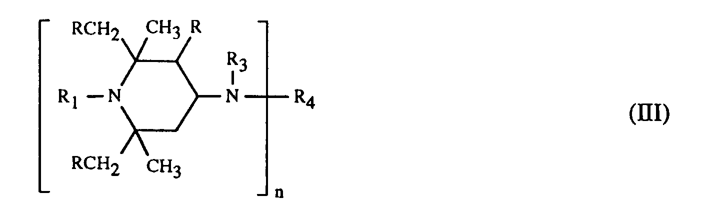 enthalten, worin n die Zahl 1 oder 2 bedeutet, R und R₁ die unter der Formel (II) angegebene Bedeutung haben, R₃ Wasserstoff, C₁-C₁₂ Alkyl, C₂-C₅ Hydroxyalkyl, C₅-C₇ Cycloalkyl, C₇-C₈ Aralkyl, C₂-C₁₈Alkanoyl, C₃-C₅Alkenoyl oder Benzoyl ist und R₄ wenn n 1 ist, Wasserstoff, C₁-C₁₈ Alkyl, C₃-C₈Alkenyl, C₅-C₇ Cycloalkyl, mit einer Hydroxy-, Cyano-, Alkoxycarbonyl- oder Carbamidgruppe substituiertes C₁-C₄ Alkyl, Glycidyl, eine Gruppe der Formel -CH₂-CH(OH)-Z oder der Formel -CONH-Z ist, worin Z Wasserstoff, Methyl oder Phenyl bedeutet; wenn n 2 ist, C₂-C₁₂ Alkylen, C₆-C₁₂ Arylen, Xylylen, eine -CH₂-CH(OH)-CH₂-Gruppe oder eine Gruppe -CH₂-CH(OH)-CH₂-O-D-O- bedeutet, worin D C₂-C₁₀ Alkylen, C₆-C₁₅ Arylen, C₆-C₁₂ Cycloalkylen ist, oder vorausgesetzt, dass R₃ nicht Alkanoyl, Alkenoyl oder Benzoyl bedeutet, R₄ auch einen zweiwertigen Rest einer aliphatischen, cycloaliphatischen oder aromatischen Dicarbonsäure oder Dicarbaminsäure oder auch die Gruppe -CO- bedeuten kann, oder R₃ und R₄ zusammen, wenn n 1 ist, den zweiwertigen Rest einer aliphatischen, cycloaliphatischen oder aromatischen 1,2- oder 1,3-Dicarbonsäure bedeuten können.

12. Handelsformen gemäss Anspruch 8, dadurch gekennzeichnet, dass sie ein sterisch gehindertes Amin der Formel 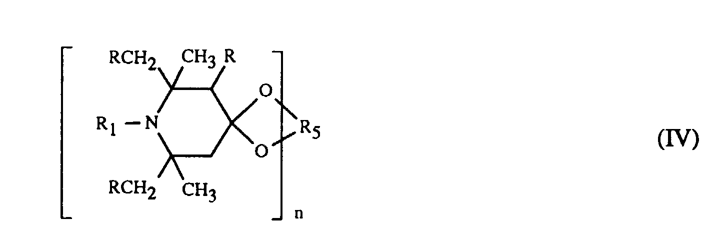 enthalten, worin n die Zahl 1 oder 2 bedeutet, R und R₁ die unter der Formel (II) im Anspruch 3 angegebene Bedeutung haben und R₅, wenn n 1 ist, C₂-C₈-Alkylen oder -Hydroxyalkylen oder C₄-C₂₂ Acyloxyalkylen und, wenn n 2 ist, die Gruppe (-CH₂)₂C(CH₂-)₂ bedeutet.

13. Handelsformen gemäss Anspruch 8, dadurch gekennzeichnet, dass sie ein sterisch gehindertes Amin der Formel VA, VB oder VC 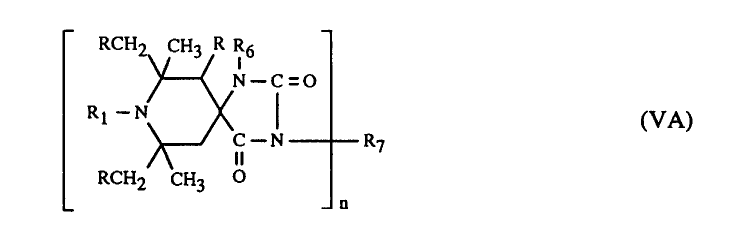 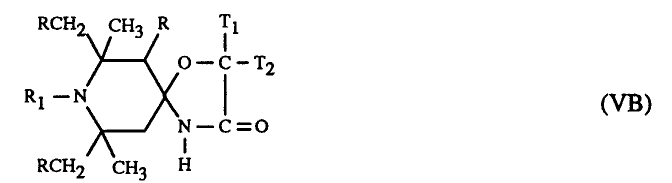 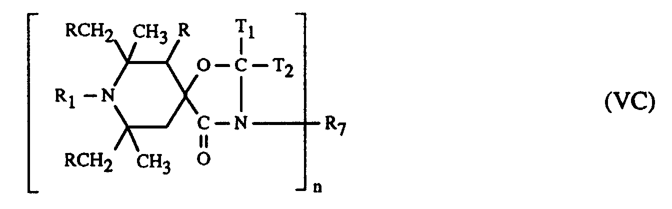 enthalten, worin n die Zahl 1 oder 2 bedeutet, R und R₁ die unter der Formel (II) im Anspruch 3 angegebene Bedeutung haben, R₆ Wasserstoff, C₁-C₁₂ Alkyl, Allyl, Benzyl, Glycidyl oder C₂-C₆ Alkoxyalkyl ist und R₇, wenn n 1 ist, Wasserstoff, C₁-C₁₂ Alkyl, C₃-C₅ Alkenyl, C₇-C₉ Aralkyl, C₅-C₇ Cycloalkyl, C₂-C₄ Hydroxyalkyl, C₂-C₆ Alkoxyalkyl, C₆-C₁₀ Aryl, Glycidyl oder eine Gruppe der Formel -(CH₂)ₚ-COO-Q oder der Formel -(CH₂)ₚ-O-CO-Q ist, worin p 1 oder 2 und Q C₁-C₄ Alkyl oder Phenyl sind, wenn n 2 ist, C₂-C₁₂ Alkylen, C₄-C₁₂-Alkenylen, C₆-C₁₂ Arylen, eine Gruppe -CH₂-CH(OH)-CH₂-O-D-O-CH₂-CH(OH)-CH₂-, worin D C₂-C₁₀ Alkylen, C₆-C₁₅Arylen, C₆-C₁₂Cycloalkylen ist, oder eine Gruppe -CH₂CH(OZ')CH₂-(OCH₂-CH(OZ')CH₂)₂-bedeutet, worin Z' Wasserstoff, C₁-C₁₈ Alkyl, Allyl, Benzyl, C₂-C₁₂ Alkanoyl oder Benzoyl ist, T₁ und T₂ unabhängig voneinander Wasserstoff, C₁-C₁₈ Alkyl oder gegebenenfalls durch Halogen oder C₁-C₄ Alkyl substituiertes C₆-C₁₀ Aryl oder C₇-C₉ Aralkyl bedeuten oder T₁ und T₂ zusammen mit dem sie bindenden C-Atom einen C₅-C₁₂ Cycloalkanring bilden.

14. Handelsformen gemäss Anspruch 8, dadurch gekennzeichnet, dass sie ein sterisch gehindertes Amin der Formel 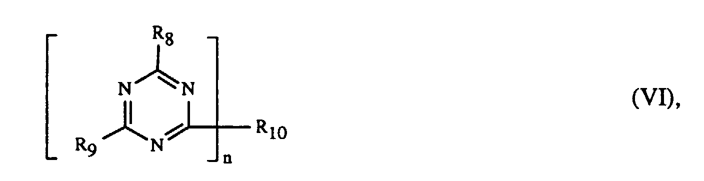 enthalten, worin n die Zahl 1 oder 2 ist und R₈ eine Gruppe der Formel 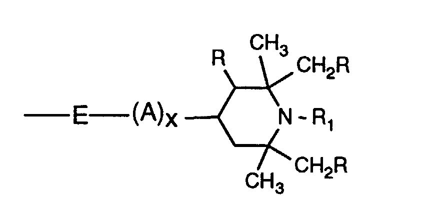 bedeutet, worin R und R₁ die unter der Formel (II) im Anspruch 3 angegebene Bedeutung haben, E -O- oder -NR₁₁- ist, A C₂-C₆-Alkylen oder -(CH₂)₃-O- und x die Zahlen O oder 1 bedeuten, R₉ gleich R₈ oder eine der Gruppen -NR₁₁R₁₂, -OR₁₃, -NHCH₂OR₁₃ oder -N(CH₂OR₁₃)₂ ist, R₁₀, wenn n = 1 ist, gleich R₈ oder R₉, und wenn n = 2 ist, eine Gruppe -E-B-E- ist, worin B gegebenenfalls durch -N(R₁₁)- unterbrochenes C₂-C₆ Alkylen bedeutet, R₁₁ C₁-C₁₂ Alkyl, Cyclohexyl, Benzyl oder C₁-C₄ Hydroxyalkyl oder eine Gruppe der Formel 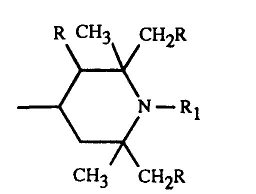 ist, R₁₂ C₁-C₁₂ Alkyl, Cyclohexyl, Benzyl, C₁-C₄ Hydroxyalkyl und R₁₃ Wasserstoff, C₁-C₁₂ Alkyl oder Phenyl bedeuten oder R₁₁ und R₁₂ zusammen C₄-C₅-Alkylen oder -Oxaalkylen, beispielsweise 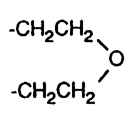 oder eine Gruppe der Formel 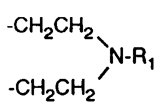 sind oder auch R₁₁ und R₁₂ jeweils eine Gruppe der Formel 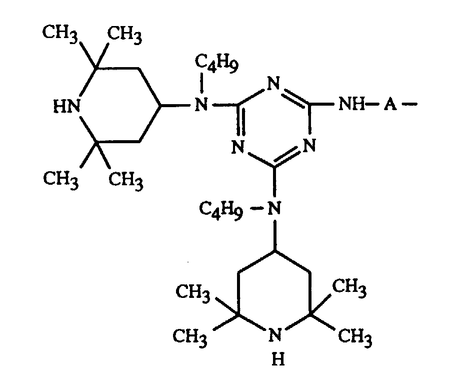 bedeuten.

15. Handelsformen gemäss Anspruch 8, dadurch gekennzeichnet, dass sie als sterisch gehindertes Amin eine oligomere oder polymere Verbindungen enthalten, deren wiederkehrende Struktureinheit einen 2,2,6,6-Tetraalkylpiperidinrest der Formel (I) gemäss Anspruch 2 enthält.

16. Handelsformen gemäss Anspruch 6, dadurch gekennzeichnet, dass sie als UV-Absorber ein 2-(2'-Hydroxyphenyl)-benzotriazol, ein 2-Hydroxybenzophenon, einen Ester von gegebenenfalls substituierten Benzoesäuren oder ein 2-(2-Hydroxyphenyl)-1,3,5-triazin enthalten.

17. Handelsformen gemäss Anspruch 16, dadurch gekennzeichnet, dass sie als UV-Absorber 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Di-tert-butyl-2'-hydroxyphenyl)-5-chlor-benzotriazol, 2-(3'-tert-Butyl-2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)-benzotriazol, 2-(3',5'-Bis-(α,α-dimethylbenzyl)-2'-hydroxyphenyl)-benzotriazol, Mischung aus 2-(3'-tert-Butyl-2'-hydroxy-5'-(2-octyloxycarbonylethyl)phenyl)-5-chlorbenzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, 2-(3'-tert-Butyl-2'-hydroxy-5'-(2-isooctyloxycarbonylethyl)phenyl-benzotriazol, 2,2'-Methylen-bis[4-(1,1,3,3-tetramethylbutyl)-6-benzotriazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300; oder [R-CH₂CH₂-COO(CH₂)₃ 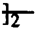 mit R = 3'-tert-Butyl-4'-hydroxy-5'-2H-benzotriazol-2-yl-phenyl enthalten.

18. Handelsformen gemäss Anspruch 17, dadurch gekennzeichnet, dass sie als UV-Absorber 2-(3'-Dodecyl-2'-hydroxy-5'-methylphenyl)-benzotriazol enthalten.

19. Handelsformen gemäss Anspruch 7, dadurch gekennzeichnet, dass sie als Antioxidans eine Verbindung aus einer der folgenden Klassen enthalten: Alkylierte Monophenole, Alkylthiomethylphenole, Hydrochinone und alkylierte Hydrochinone, Hydroxylierte Thiodiphenylether, Alkyliden-Bisphenole, O-, N- und S-Benzylverbindungen, Hydroxybenzylierte Malonate, Hydroxybenzyl-Aromaten, Triazinverbindungen, Benzylphosphonate, Acylaminophenole, Ester der β-(3,5-Di-tert-butyl-4-hydroxyphenyl)-propionsäure, der β-(5-tert-Butyl-4-hydroxy-3-methylphenyl)-propionsäure, der β-(3,5-Dicyclohexyl-4-hydroxyphenyl)-propionsäure oder der 3,5-Di-tert-butyl-4-hydroxyphenylessigsäure mit ein- oder mehrwertigen Alkoholen, Amide der β-(3,5-Di-tert-butyl-4-hydroxyphenyl)-propionsäure.

20. Handelsformen gemäss Anspruch 19, dadurch gekennzeichnet, dass sie als Antioxidans einen Ester der β-(3,5-Di-tert-butyl-4-hydroxyphenyl)-propionsäure mit ein- oder mehrwertigen Alkoholen enthalten, wobei als Alkohol Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan oder 4-Hydroxymethyl-1-phospha-2,6,7-trioxabicyclo-[2.2.2]-octan in Frage kommt.

21. Handelsformen gemäss Anspruch 20, dadurch gekennzeichnet, dass sie als Antioxidans β-(3,5-Di-tert-butyl-4-hydroxyphenyl)-propionsäure enthalten, die mit Octanol verestert wurde.

22. Handelsformen gemäss einem der Ansprüche 3 bis 21, dadurch gekennzeichnet, dass sie als Emulgator eine Mischung aus
b) einem Polyalkohol, der ganz oder teilweise mit einer Fettsäure verestert ist, und
c) einem Umsetzungsprodukt aus einem Polyalkohol, der ganz oder teilweise mit einer Fettsäure verestert ist, und einem Alkylenoxid enthalten.

23. Handelsformen gemäss Anspruch 22, dadurch gekennzeichnet, dass sie als Emulgator eine Mischung aus einem Polyalkohol, der ganz oder teilweise mit einer Fettsäure verestert ist, und einem Umsetzungsprodukt aus einem Polyalkohol, der ganz oder teilweise mit einer Fettsäure verestert ist, und einem Alkylenoxid enthalten, wobei als Polyalkohol Diglykol, Alkylen- oder Dialkylenglykole, Sorbitan, Sorbit, Mannit, Xylit, Pentaerythrit, Diglycerin, Glycerin und Glycerylsorbit in Frage kommen.

24. Handelsformen gemäss Anspruch 23, dadurch gekennzeichnet, dass sie als Emulgator eine Mischung aus einem Polyalkohol, der ganz oder teilweise mit einer Fettsäure verestert ist, und einem Umsetzungsprodukt aus einem Polyalkohol, der ganz oder teilweise mit einer Fettsäure verestert ist, und einem Alkylenoxid enthalten, wobei als Fettsäure Capryl-, Caprin-, Laurin-, Myristin-, Palmitin-, Stearin-, Arachin-, Behen-, Kokosfett-(C₈-C₁₈), Decen-, Dodecen-, Tetradecen-, Hexadecen-, Oel-, Linol-, Linolen-, Eikosen-, Dokosen- oder Clupanodonsäure in Frage kommen.

25. Handelsformen gemäss Anspruch 24, dadurch gekennzeichnet, dass sie als Polyalkohol, der ganz oder teilweise mit einer Fettsäure verestert ist, Sorbitan, Sorbit, Mannit, Xylit oder Pentaerythrit, die mit 1 bis 3 Mol Laurin-, Palmitin-, Stearin-, Oel-, Linol- oder Linolensäure verestert sind, enthalten.

26. Handelsformen gemäss einem der Ansprüche 5 bis 25, dadurch gekennzeichnet, dass sie als Alkylenoxid Ethylenoxid enthalten.

27. Handelsformen gemäss Anspruch 26, dadurch gekennzeichnet, dass sie Umsetzungsprodukte aus mit 1 bis 3 Mol Oelsäure verestertem Sorbitan mit 5 bis 40 Mol Ethylenoxid enthalten.

28. Handelsformen gemäss Anspruch 5, dadurch gekennzeichnet, dass sie
a) 75 bis 95 Gew. % eines wasserunlöslichen sterisch gehinderten Amins enthalten, sowie
b) 25 bis 5 Gew. % eines Gemisches aus
b1) einem Polyalkohol, der ganz oder teilweise mit einer Fettsäure verestert ist und
b2) einem Umsetzungsprodukt aus einem Polyalkohol, der ganz oder teilweise mit einer Fettsäure verestert ist, und einem Alkylenoxid, wobei das Verhältnis der Komponenten b1) : b2) zwischen 3 : 7 und 7 : 3 liegt.

29. Handelsformen gemäss Anspruch 6, dadurch gekennzeichnet, dass sie
a) 75 bis 95 Gew. % eines wasserunlöslichen UV-Absorbers sowie
b) 25 bis 5 Gew. % eines Gemisches aus
b1) einem Polyalkohol, der ganz oder teilweise mit einer Fettsäure verestert ist und
b2) einem Umsetzungsprodukt aus einem Polyalkohol, der ganz oder teilweise mit einer Fettsäure verestert ist, und einem Alkylenoxid, wobei das Verhältnis der Komponenten b1) : b2) zwischen 9 : 1 und 5 : 5 liegt, enthalten.

30. Handelsformen gemäss Anspruch 7, dadurch gekennzeichnet, dass sie
a) 75 bis 95 Gew. % eines wasserunlöslichen Antioxidans sowie
b) 25 bis 5 Gew. % eines Gemisches aus
b1) einem Polyalkohol, der ganz oder teilweise mit einer Fettsäure verestert ist und
b2) einem Umsetzungsprodukt aus einem Polyalkohol, der ganz oder teilweise mit einer Fettsäure verestert ist, und einem Alkylenoxid, wobei das Verhältnis der Komponenten b1) : b2) zwischen 1 : 9 und 5 : 5 liegt, enthalten.

31. Verwendung der Handelsformen gemäss einem der Ansprüche 5 bis 30 als Licht und/oder Wärmeschutzmittel für textile Beschichtungen aus Polyurethanen, Acrylaten, Silikon-Acrylaten oder Styrol enthaltenden Copolymeren, für Leder-Imitate aus Polyester/Polyurethan oder Polyamid/Polyurethan, für Polypropylen oder für Leder.

32. Verwendung der Handelsformen gemäss einem der Ansprüche 5 bis 30 als Lichtschutzmittel für Leder.

33. Das mit einer Handelsform gemäss einem der Ansprüche 5 bis 30 oder nach einem Verfahren gemäss einem der Ansprüche 1 oder 2 behandelte Material.

## Claims

1. A process for improving the resistance of leather and imitation leather to the influence of light and/or heat, which comprises treating this substrate with an aqueous emulsion or dispersion comprising an emulsifier or dispersant and
a) a water-insoluble sterically hindered amine,
b) a water-insoluble UV absorber and/or
c) a water-insoluble antioxidant and
d) if appropriate, other additives.

2. A process according to claim 1, wherein the substrate is treated with an aqueous emulsion comprising an emulsifier and
a) a water-insoluble sterically hindered amine,
b) a water-insoluble UV absorber and/or
c) a water-insoluble antioxidant and
d) if appropriate, other additives.

3. An aqueous liquor for carrying out the process according to either of claims 1 and 2, which comprises water, an emulsifier or dispersant and
a) a water-insoluble sterically hindered amine,
b) a water-insoluble UV absorber and/or
c) a water-insoluble antioxidant and
d) if appropriate, other additives.

4. An aqueous liquor according to claim 3, which comprises water and an emulsifier and
a) a water-insoluble sterically hindered amine,
b) a water-insoluble UV absorber and/or
c) a water-insoluble antioxidant and
d) if appropriate, other additives.

5. A physical form of a sterically hindered amine, which comprises
a) a water-insoluble sterically hindered amine,
b) a polyalcohol which is completely or partly esterified with a fatty acid,
c) a reaction product of a polyalcohol, which is completely or partly esterified with a fatty acid, and an alkylene oxide, and
d) if appropriate, water and other additives.

6. A physical form of a UV absorber, which comprises
a) a water-insoluble UV absorber,
b) a polyalcohol which is completely or partly esterified with a fatty acid,
c) a reaction product of a polyalcohol, which is completely or partly esterified with a fatty acid, and an alkylene oxide, and
d) if appropriate, water and other additives.

7. A physical form of an antioxidant, which comprises
a) a water-insoluble antioxidant,
b) a polyalcohol which is completely or partly esterified with a fatty acid,
c) a reaction product of a polyalcohol, which is completely or partly esterified with a fatty acid, and an alkylene oxide, and
d) if appropriate, water and other additives.

8. A physical form according to claim 5, which comprises, as the sterically hindered amine, a compound which contains at least one group of the formula I 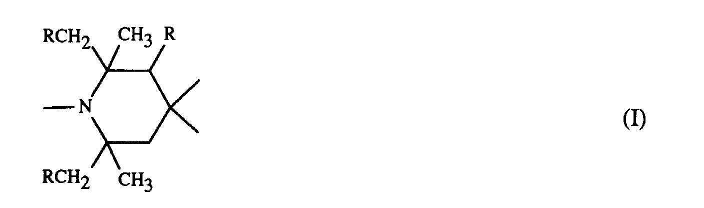 in which R is hydrogen or methyl.

9. A physical form according to claim 8, which comprises a sterically hindered amine of the formula II 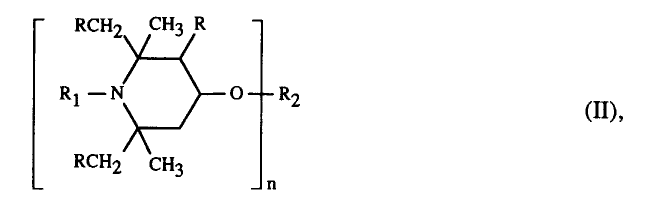 in which n is a number from 1 to 4, R is hydrogen or methyl, R₁ is hydrogen, hydroxyl, C₁-C₁₂alkyl, C₃-C₈alkenyl, C₃-C₈alkinyl, C₇-C₁₂aralkyl, C₁-C₈alkanoyl, C₃-C₅alkenoyl, glycidyl, -O-C₁-C₁₂alkyl, -O-C₁-C₈alkanoyl or a group -CH₂CH(OH)-Z, in which Z is hydrogen, methyl or phenyl and R₂, if n is 1, is hydrogen, C₁-C₁₈alkyl, which may be interrupted by one or more oxygen atoms, cyanoethyl, benzyl, glycidyl, a monovalent radical of an aliphatic, cycloaliphatic, araliphatic, unsaturated or aromatic carboxylic acid, carbamic acid or phosphorus-containing acid, or a monovalent silyl radical, and in which R₂, if n is 2, is C₁-C₁₂alkylene, C₄-C₁₂alkenylene, xylylene, a divalent radical of an aliphatic, cycloaliphatic, araliphatic or aromatic dicarboxylic acid, dicarbamic acid or phosphorus- containing acid or a divalent silyl radical, if n is 3, is a trivalent radical of an aliphatic, cycloaliphatic or aromatic tricarboxylic acid, of an aromatic tricarbamic acid or of a phosphorus-containing acid or a trivalent silyl radical, and, if n is 4, is a tetravalent radical of an aliphatic, cycloaliphatic or aromatic tetracarboxylic acid.

10. A physical form according to claim 9, which comprises a sterically hindered amine of the formula II in which n is 1 or 2, R is hydrogen or methyl,R₁ is hydrogen, C₁-C₄alkyl, allyl, benzyl, acetyl or acryloyl and R₂, if n is 1, is a radical of an aliphatic carboxylic acid having 2 to 18 C atoms, of a cycloaliphatic carboxylic acid having 7 to 15 C atoms, of an α,β-unsaturated carboxylic acid having 3 to 5 C atoms or of an aromatic carboxylic acid having 7 to 15 C atoms, and, if n is 2, is a radical of an aliphatic dicarboxylic acid having 2 to 36 C atoms, of a cycloaliphatic or aromatic dicarboxylic acid having 8 to 14 C atoms or of an aliphatic, cycloaliphatic or aromatic dicarbamic acid having 8 to 14 C atoms.

11. A physical form according to claim 8, which comprises a sterically hindered amine of the formula 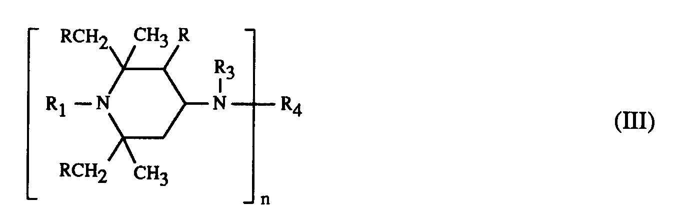 in which n is the number 1 or 2, R and R₁ are as defined under formula (II), R₃ is hydrogen, C₁-C₁₂alkyl, C₂-C₅hydroxyalkyl, C₅-C₇cycloalkyl, C₇-C₈aralkyl, C₂-C₁₈alkanoyl, C₃-C₅alkenoyl or benzoyl and R₄, if n is 1, is hydrogen, C₁-C₁₈alkyl, C₃-C₈alkenyl, C₅-C₇cycloalkyl, C₁-C₄alkyl substituted by a hydroxyl, cyano, alkoxycarbonyl or carbamide group, glycidyl, or a group of the formula -CH₂-CH(OH)-Z or of the formula -CONH-Z, in which Z is hydrogen, methyl or phenyl; or, if n is 2, is C₂-C₁₂alkylene, C₆-C₁₂arylene, xylylene, a -CH₂-CH(OH)-CH₂- group or a group -CH₂-CH(OH)-CH₂-O-D-O-,in which D is C₂-C₁₀alkylene, C₆-C₁₅arylene or C₆-C₁₂cycloalkylene, or, provided that R₃ is not alkanoyl, alkenoyl or benzoyl, R₄ can also be a divalent radical of an aliphatic, cycloaliphatic or aromatic dicarboxylic acid or dicarbamic acid or also the group -CO-, or R₃ and R₄ together, if n is 1, can be the divalent radical of an aliphatic, cycloaliphatic or aromatic 1,2- or 1,3-dicarboxylic acid.

12. A physical form according to claim 8, which comprises a sterically hindered amine of the formula 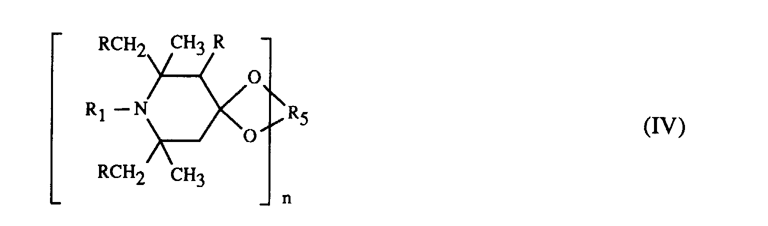 in which n is the number 1 or 2, R and R₁ are as defined under formula (II) in claim 3 and R₅, if n is 1, is C₂-C₈alkylene or -hydroxyalkylene or C₄-C₂₂acyloxyalkylene, and, if n is 2, is the group (-CH₂)₂C(CH₂-)₂.

13. A physical form according to claim 8, which comprises a sterically hindered amine of the formula VA, VB or VC 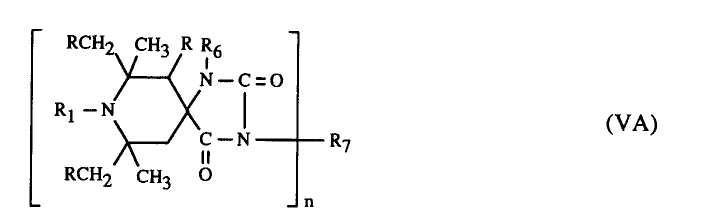 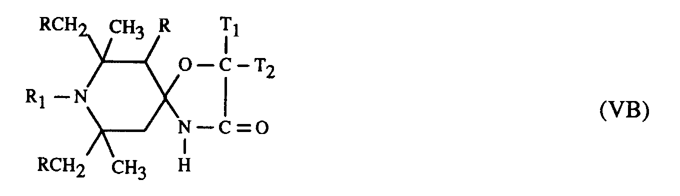 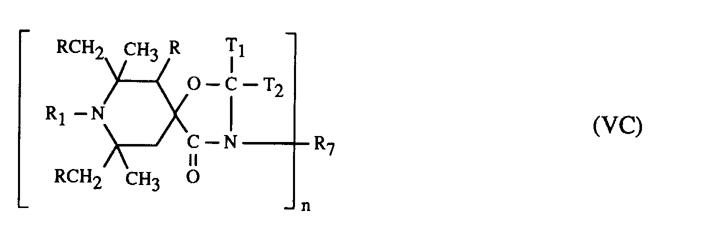 in which n is the number 1 or 2, R and R₁ are as defined under formula (II) in claim 3, R₆ is hydrogen, C₁-C₁₂alkyl, allyl, benzyl, glycidyl or C₂-C₆alkoxyalkyl and R₇, if n is 1, is hydrogen, C₁-C₁₂alkyl, C₃-C₅alkenyl, C₇-C₉aralkyl, C₅-C₇cycloalkyl, C₂-C₄hydroxyalkyl, C₂-C₆alkoxyalkyl, C₆-C₁₀aryl, glycidyl or a group of the formula -(CH₂)ₚ-COO-Q or of the formula -(CH₂)ₚ-O-CO-Q , in which p is 1 or 2 and Q is C₁-C₄alkyl or phenyl, or, if n is 2, is C₂-C₁₂alkylene, C₄-C₁₂alkenylene, C₆-C₁₂arylene, a group -CH₂-CH(OH)-CH₂-O-D-O-CH₂-CH(OH)-CH₂-, in which D is C₂-C₁₀alkylene, C₆-C₁₅arylene, C₆-C₁₂cycloalkylene, or a group -CH₂CH(OZ')CH₂-(OCH₂-CH(OZ')CH₂)₂-, in which Z' is hydrogen, C₁-C₁₈alkyl, allyl, benzyl, C₂-C₁₂alkanoyl or benzoyl, T₁ and T₂ independently of one another are hydrogen, C₁-C₁₈alkyl, C₆-C₁₀aryl or C₇-C₉aralkyl which are unsubstituted or substituted by halogen or C₁-C₄alkyl, or T₁ and T₂, together with the C atom joining them, form a C₅-C₁₂cycloalkane ring.

14. A physical form according to claim 8, which comprises a sterically hindered amine of the formula 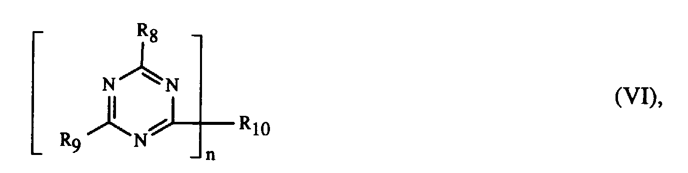 in which n is the number 1 or 2 and R₈ is a group of the formula 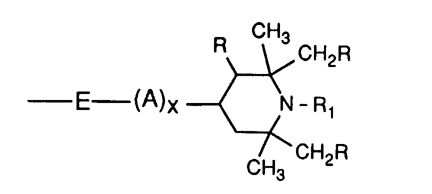 in which R and R₁ are as defined under formula (II) in claim 3, E is -O- or -NR₁₁-, A is C₂-C₆alkylene or -(CH₂)₃-O- and x is the number 0 or 1, R₉ is the same as R₈ or is one of the groups -NR₁₁R₁₂, -OR₁₃, -NHCH₂OR₁₃ or -N(CH₂OR₁₃)₂, R₁₀, if n is 1, is the same as R₈ or R₉, and, if n is 2, is a group -E-B-E-, in which B is C₂-C₆alkylene, which may be interrupted by -N(R₁₁)-, R₁₁ is C₁-C₁₂alkyl, cyclohexyl, benzyl or C₁-C₄hydroxyalkyl, or a group of the formula 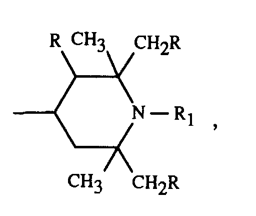 R₁₂ is C₁-C₁₂alkyl, cyclohexyl, benzyl or C₁-C₄hydroxyalkyl and R₁₃ is hydrogen, C₁-C₁₂alkyl or phenyl, or R₁₁ and R₁₂ together are C₄-C₅alkylene or -oxaalkylene, for example 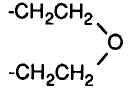 or a group of the formula 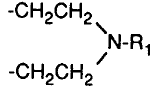 or R₁₁ and R₁₂ are also each a group of the formula

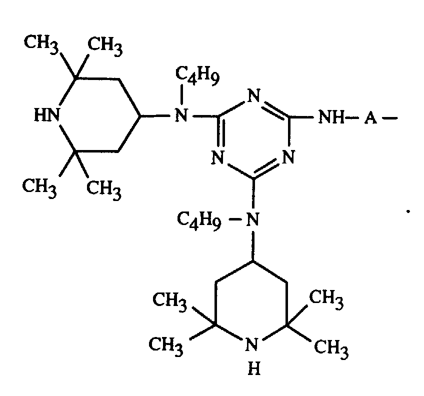

15. A physical form according to claim 8, which comprises, as the sterically hindered amine, an oligomeric or polymeric compound, the structural repeating unit of which contains a 2,2,6,6-tetraalkylpiperidine radical of the formula (I) according to claim 2.

16. A physical form according to claim 6, which comprises, as the UV absorber, a 2-(2'-hydroxyphenyl)-benzotriazole, a 2-hydroxybenzophenone, an ester of a substituted or unsubstituted benzoic acid or a 2-(2-hydroxyphenyl)-1,3,5-triazine.

17. A physical form according to claim 16, which comprises, as the UV absorber, 2-(2'-hydroxy-5'-methylphenyl)-benzotriazole, 2-(3',5'-di-tert-butyl-2'-hydroxyphenyl)-benzotriazole, 2-(5'-tert-butyl-2'-hydroxyphenyl)-benzotriazole, 2-(2'-hydroxy-5'-(1,1,3,3-tetramethylbutyl)phenyl)-benzotriazole, 2-(3',5'-di-tert-butyl-2'-hydroxyphenyl)-5-chloro-benzotriazole, 2-(3'-tent-butyl- 2'-hydroxy-5'-methylphenyl)-5-chloro-benzotriazole, 2-(3'-sec-butyl-5'-tert-butyl-2'-hydroxyphenyl)-benzotriazole, 2-(2'-hydroxy-4'-octoxyphenyl)-benzotriazole, 2-(3',5'-di-tert-amyl-2'-hydroxyphenyl)-benzotriazole, 2-(3',5'-bis-(a,a-dimethylbenzyl)-2'-hydroxyphenyl)-benzotriazole, mixture of 2-(3'-tert-butyl-2'-hydroxy-5'-(2-octyloxycarbonylethyl)phenyl)-5-chloro-benzotriazole, 2-(3'-tert-butyl-5'-[2-(2-ethylhexyloxy)-carbonylethyl]-2'-hydroxyphenyl)-5-chloro-benzotriazole, 2-(3'-tert-butyl-2'-hydroxy-5'-(2-methoxycarbonylethyl)phenyl)-5-chloro-benzotriazole, 2-(3'-tert-butyl-2'-hydroxy-5'-(2-methoxycarbonylethyl)phenyl)-benzotriazole, 2-(3'-tert-butyl-2'-hydroxy-5'-(2-octyloxycarbonylethyl)phenyl)-benzotriazole, 2-(3'-tert-butyl-5'-[2-(2-ethylhexyloxy)carbonylethyl]-2'-hydroxyphenyl)-benzotriazole, 2-(3'-dodecyl-2'-hydroxy-5'-methylphenyl)-benzotriazole, 2-(3'-tert-butyl-2'-hydroxy-5'-(2-isooctyloxycarbonylethyl)phenyl-benzotriazole, 2,2'-methylene-bis[4-(1,1,3,3-tetramethylbutyl)-6-benzotriazol-2-yl-phenol]; transesterification product of 2-[3'-tert-butyl-5'-(2-methoxycarbonylethyl)-2'-hydroxy-phenyl]-benzotriazole with polyethylene glycol 300; or [R-CH₂CH₂-COO(CH₂)₃ 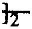 in which R is 3'-tert-butyl-4'-hydroxy-5'-2H-benzotriazol-2-yl-phenyl.

18. A physical form according to claim 17, which comprises, as the UV absorber, 2-(3'-dodecyl-2'-hydroxy-5'-methylphenyl)-benzotriazole.

19. A physical form according to claim 7, which comprises, as the antioxidant, a compound from one of the following classes: alkylated monophenols, alkylthiomethylphenols, hydroquinones and alkylated hydroquinones, hydroxylated thiodiphenyl ethers, alkylidene-bisphenols, O-, N- and S-benzyl compounds, hydroxybenzylated malonates, hydroxybenzyl aromatics, triazine compounds, benzylphosphonates, acylaminophenols, esters of β-(3,5-di-tert-butyl-4-hydroxyphenyl)-propionic acid, of β-(5-tert-butyl-4-hydroxy-3-methylphenyl)-propionic acid, of β-(3,5-dicyclohexyl-4-hydroxyphenyl)-propionic acid or of 3,5-di-tert-butyl-4-hydroxyphenylacetic acid with mono- or polyhydric alcohols, and amides of β-(3,5-di-tert-butyl-4-hydroxyphenyl)-propionic acid.

20. A physical form according to claim 19, which comprises, as the antioxidant, an ester of β-(3,5-di-tert-butyl-4-hydroxyphenyl)-propionic acid with a mono- or polyhydric alcohol, for example with methanol, ethanol, octanol, octadecanol, 1,6-hexanediol, 1,9-nonanediol, ethylene glycol, 1,2-propanediol, neopentylglycol, thiodiethylene glycol, diethylene glycol, triethylene glycol, pentaerythritol, tris-(hydroxyethyl) isocyanurate, N,N'-bis-(hydroxyethyl)-oxalic acid diamide, 3-thiaundecanol, 3-thiapentadecanol, trimethylhexanediol, trimethylolpropane or 4-hydroxymethyl-1-phospha-2,6,7-trioxabicyclo-[2.2.2]-octane.

21. A physical form according to claim 20, which comprises, as the antioxidant, β-(3,5-di-tert-butyl-4-hydroxyphenyl)-propionic acid which has been esterified with octanol.

22. A physical form according to any one of claims 3 to 21, which comprises, as the emulsifier, a mixture of
b) a polyalcohol which is completely or partly esterified with a fatty acid and
c) a reaction product of a polyalcohol, which is completely or partly esterified with a fatty acid, and an alkylene oxide.

23. A physical form according to claim 22, which comprises, as the emulsifier, a mixture of a polyalcohol which is completely or partly esterified with a fatty acid and a reaction product of a polyalcohol, which is completely or partly esterified with a fatty acid, and an alkylene oxide, the polyalcohol being, for example, diglycol, an alkylene or dialkylene glycol, sorbitan, sorbitol, mannitol, xylitol, pentaerythritol, diglycerol, glycerol or glyceryl-sorbitol.

24. A physical form according to claim 23, which comprises, as the emulsifier, a mixture of a polyalcohol which is completely or partly esterified with a fatty acid and a reaction product of a polyalcohol, which is completely or partly esterified with a fatty acid, and an alkylene oxide, the fatty acid being, for example, caprylic, capric, lauric, myristic, palmitic, stearic, arachic, behenic, coconut fat-(C₈-C₁₈), decenoic, dodecenoic, tetradecenoic, hexadecenoic, oleic, linoleic, linolenic, eicosenoic, docosenoic or clupanodonic acid.

25. A physical form according to claim 24, which comprises, as the polyalcohol which is completely or partly esterified with a fatty acid, sorbitan, sorbitol, mannitol, xylitol or pentaerythritol which is esterified with 1 to 3 mol of lauric, palmitic, stearic, oleic, linoleic or linolenic acid.

26. A physical form according to any one of claims 5 to 25, which comprises, as the alkylene oxide, ethylene oxide.

27. A physical form according to claim 26, which comprises a reaction product of sorbitan esterified with 1 to 3 mol of oleic acid with 5 to 40 mol of ethylene oxide.

28. A physical form according to claim 5, which comprises
a) 75 to 95 % by weight of a water-insoluble sterically hindered amine and
b) 25 to 5 % by weight of a mixture of
b1) a polyalcohol which is completely or partly esterified with a fatty acid and
b2) a reaction product of a polyalcohol, which is completely or partly esterified with a fatty acid, and an alkylene oxide, the ratio of components b1):b2) being between 3:7 and 7:3.

29. A physical form according to claim 6, which comprises
a) 75 to 95 % by weight of a water-insoluble UV absorber and
b) 25 to 5 % by weight of a mixture of
b1) a polyalcohol which is completely or partly esterified with a fatty acid and
b2) a reaction product of a polyalcohol, which is completely or partly esterified with a fatty acid, and an alkylene oxide, the ratio of components b1):b2) being between 9:1 and 5:5.

30. A physical form according to claim 7, which comprises
a) 75 to 95 % by weight of a water-insoluble antioxidant and
b) 25 to 5 % by weight of a mixture of
b1) a polyalcohol which is completely or partly esterified with a fatty acid and
b2) a reaction product of a polyalcohol, which is completely or partly esterified with a fatty acid, and an alkylene oxide, the ratio of components b1):b2) being between 1:9 and 5:5.

31. The use of a physical form according to any one of claims 5 to 30 as a light and/or heat stabilizer for a textile coating of polyurethane, acrylate, silicone acrylate or styrene-containing copolymer, for imitation leather of polyester/polyurethane or polyamide/polyurethane, for polypropylene or for leather.

32. The use of a physical form according to any one of claims 5 to 30 as a light stabilizer for leather.

33. The material treated with a physical form according to any one of claims 5 to 30 or by a process according to either of claims 1 and 2.

## Revendications

1. Procédé destiné à l'amélioration de la résistance du cuir et d'imitations du cuir contre l'influence de la lumière et/ou de la chaleur, caractérisé en ce qu'on traite ces substrats avec une émulsion ou une dispersion aqueuse, contenant un agent émulsionnant ou un agent dispersant et
a) une amine à empêchement stérique insoluble dans l'eau,
b) un absorbant d'UV insoluble dans l'eau et/ou
c) un antioxydant insoluble dans l'eau et
d) éventuellement d'autres additifs.

2. Procédé selon la revendication 1, caractérisé en ce qu'on traite les substrats avec une émulsion aqueuse, contenant un agent émulsionnant et
a) une amine à empêchement stérique insoluble dans l'eau,
b) un absorbant d'UV insoluble dans l'eau et/ou
c) un antioxydant insoluble dans l'eau et
d) éventuellement d'autres additifs.

3. Bains aqueux pour la réalisation du procédé selon l'une des revendications 1 ou 2, caractérisés en ce qu'ils contiennent de l'eau, un agent émulsionnant ou dispersant et
a) une amine à empêchement stérique insoluble dans l'eau,
b) un absorbant d'UV insoluble dans l'eau et/ou
c) un antioxydant insoluble dans l'eau et
d) éventuellement d'autres additifs.

4. Bains aqueux selon la revendication 3, caractérisés en ce qu'ils contiennent de l'eau et un agent émulsionnant et
a) une amine à empêchement stérique insoluble dans l'eau,
b) un absorbant d'UV insoluble dans l'eau et/ou
c) un antioxydant insoluble dans l'eau et
d) éventuellement d'autres additifs.

5. Formes commerciales d'amine à empêchement stérique, caractérisées en ce qu'elles contiennent
a) une amine à empêchement stérique insoluble dans l'eau,
b) un polyalcool qui est partiellement ou complètement estérifié avec un acide gras,
c) un produit de réaction d'un polyalcool, qui est partiellement ou complètement estérifié avec un acide gras, et d'un oxyde d'alkylène, et
d) éventuellement de l'eau ou d'autres additifs

6. Formes commerciales d'absorbant UV, caractérisées en ce qu'elles contiennent
a) un absorbant UV insoluble dans l'eau,
b) un polyalcool qui est partiellement ou complètement estérifié avec un acide gras,
c) un produit de réaction d'un polyalcool, qui est partiellement ou complètement estérifié avec un acide gras, et d'un oxyde d'alkylène, et
d) éventuellement de l'eau ou d'autres additifs

7. Formes commerciales d'antioxydants, caractérisées en ce qu'elles contiennent
a) un antioxydant insoluble dans l'eau,
b) un polyalcool qui est partiellement ou complètement estérifié avec un acide gras,
c) un produit de réaction d'un polyalcool, qui est partiellement ou complètement estérifié avec un acide gras, et d'un oxyde d'alkylène, et
d) éventuellement de l'eau et d'autres additifs.

8. Formes commerciales selon la revendication 5, caractérisées en ce qu'elles contiennent comme amine à empêchement stérique un composé, qui contient au moins un groupe de formule I, 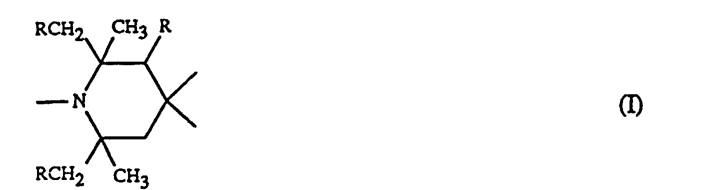 dans laquelle R est un atome d'hydrogène ou un groupe méthyle.

9. Formes commerciales selon la revendication 8, caractérisées en ce qu'elles contiennent une amine à empêchement stérique de formule II 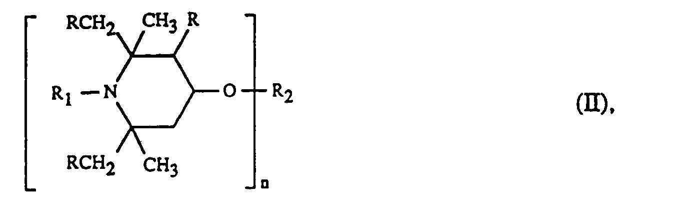 dans laquelle n représente un nombre de 1 à 4, R représente un atome d'hydrogène ou un groupe méthyle, R₁ un atome d'hydrogène, un groupe hydroxy, alkyle en C₁-C₁₂, alcényle en C₃-C₈, alcynyle en C₃-C₈, aralkyle en C₇-C₁₂, alcanoyle en C₁-C₈, alcénoyle en C₃-C₅, glycidyle, -O-alkyle en C₁-C₁₂, -O-alcanoyle en C₁-C₈ ou un groupe -CH₂CH(OH)-Z, dans lesquelles Z est un atome d'hydrogène, un groupe méthyle ou phényle, et R₂, lorsque n est 1, représente un atome d'hydrogène, un groupe alkyle en C₁-C₁₈ éventuellement interrompu par un ou plusieurs atomes d'oxygène, cyanoéthyle, benzyle, glycidyle, un radical monovalent d'un acide carboxylique, carbamique ou d'un acide contenant du phosphore, aliphatique, cycloaliphatique, araliphatique, insaturé ou aromatique, ou un groupe silyle monovalent, et dans laquelle R₂ représente, lorsque n est 2, un groupe alkylène en C₁-C₁₂, alcénylène en C₄-C₁₂, xylylène, un radical divalent d'un acide dicarboxylique, d'un acide dicarbamique, ou d'un acide contenant du phosphore, aliphatique, cycloaliphatique, araliphatique ou aromatique ou un radical silyle divalent, et représente, lorsque n est 3, un radical trivalent d'un acide tricarboxylique aliphatique, cycloaliphatique ou aromatique, d'un acide tricarbamique aromatique ou d'un acide contenant du phosphore ou un groupe silyle trivalent et représente lorsque n est 4, un radical tétravalent d'un acide tétracarboxylique aliphatique, cycloaliphatique ou aromatique.

10. Formes commerciales selon la revendication 9, caractérisées en ce qu'elles contiennent une amine à empêchement stérique de formule II, dans laquelle n représente 1 ou 2, R un atome d'hydrogène ou un groupe méthyle, R₁ un atome d'hydrogène, un groupe alkyle en C₁-C₄, allyle, benzyle, acétyle ou acryloyle et R₂, lorsque n est 1, représente un résidu d'un acide carboxylique aliphatique avec 2 à 18 atomes de carbone, d'un acide carboxylique cycloaliphatique avec 7 à 15 atomes de carbone, d'un acide carboxylique α,β-insaturé avec 3 à 5 atomes de carbone ou d'un acide carboxylique aromatique avec 7 à 15 atomes de carbone, et, lorsque n est 2, représente un résidu d'un acide dicarboxylique aliphatique avec 2 à 36 atomes de carbone, d'un acide dicarboxylique cycloaliphatique ou aromatique avec 8 à 14 atomes de carbone ou d'un acide dicarbamique aliphatique, cycloaliphatique ou aromatique avec 8 à 14 atomes de carbone.

11. Formes commerciales selon la revendication 8, caractérisées en ce qu'elles contiennent une amine à empêchement stérique de formule 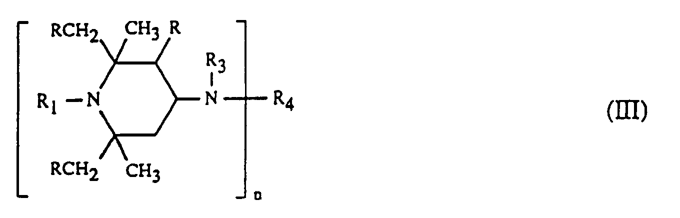 dans laquelle n représente le nombre 1 ou 2, R et R₁ ont la signification indiquée à la formule (II), R₃ représente un atome d'hydrogène, un groupe alkyle en C₁-C₁₂, hydroxyalkyle e en C₂-C₅, cycloalkyle en C₅-C₇, aralkyle en C₇-C₈, alcanoyle en C₂-C₁₈, alcénoyle en C₃-C₅ ou benzoyle et R₄ représente, lorsque n est 1, un atome d'hydrogène, un groupe alkyle en C₁-C₁₈, alcényle en C₃-C₈, cycloalkyle en C₅-C₇, alkyle en C₁-C₄ substitué avec un groupe hydroxy, cyano, alcoxycarbonyle ou carbamide, glycicyle, un groupe de formule -CH₂-CH(OH)-Z ou de formule -CONH-Z, dans lesquelles Z représente un atome d'hydrogène, un groupe méthyle ou phényle; lorsque n est 2, un groupe alkylène en C₂-C₁₂, arylène en C₆-C₁₂, xylylène, un groupe -CH₂-CH(OH)-CH₂ ou un groupe -CH₂-CH(OH)-CH₂-O-D-O-, dans lequel D représente un groupe alkylène en C₂-C₁₀, arylène en C₆-C₁₅, cycloalkylène en C₆-C₁₂, ou à condition que R₃ ne représente pas un groupe alcanoyle, alcénoyle ou benzoyle, R₄ peut aussi représenter un groupe bivalent d'un acide dicarboxylique ou d'un acide dicarbamique aliphatique, cycloaliphatique ou aromatique ou encore le groupe -CO-, ou R₃ et R₄ peuvent représenter ensemble, lorsque n est 1, le résidu bivalent d'un acide 1,2- ou 1,3-dicarboxylique aliphatique, cycloaliphatique ou aromatique.

12. Formes commerciales selon la revendication 8, caractérisées en ce qu'elles contiennent une amine à empêchement stérique de formule 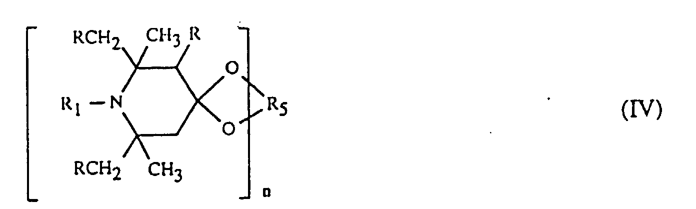 dans laquelle n représente le nombre 1 ou 2, R et R₁ ont la signification indiquée sous la formule (II) dans la revendication 3 et R₅, lorsque n est 1, représente un groupe alkylène ou hydroxyalkylène en C₂-C₈, ou acyloxyalkylène en C₄-C₂₂ et, lorsque n est 2, représente le groupe (-CH₂)₂C(CH₂-)₂.

13. Formes commerciales selon la revendication 8, caractérisées en ce qu'elles contiennent une amine à empêchement stérique de formule VA, VB ou VC 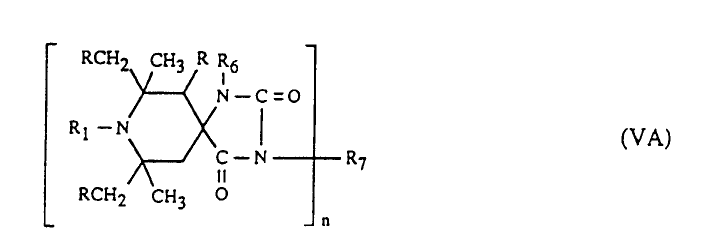 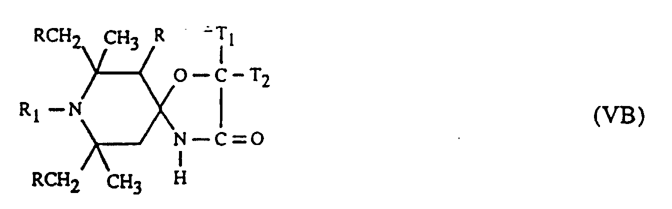 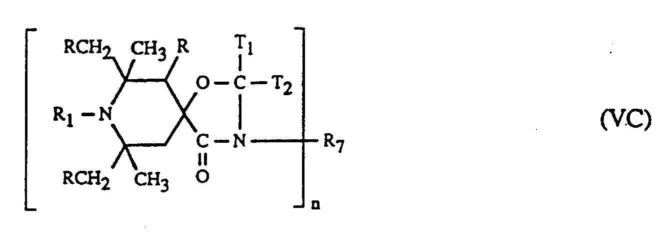 dans lesquelles n représente le nombre 1 ou 2, R et R₁ ont la signification indiquée sous la formule (II) dans la revendication 3, R₆ représente un atome d'hydrogène, un groupe alkyle en C₁-C₁₂, allyle, benzyle, glycidyle ou alcoxyalkyle en C₂-C₆ et R₇, lorsque n est 1, représente un atome d'hydrogène, un groupe alkyle en C₁-C₁₂, alcényle en C₃-C₅, aralkyle en C₇-C₉, cycloalkyle en C₅-C₇, hydroxyalkyle en C₂-C₄, alcoxyalkyle en C₂-C₆, aryle en C₆-C₁₀, glycidyle ou un groupe de formule -(CH₂)ₚ-COO-Q ou de formule -(CH₂)ₚ-O-CO-Q, dans lesquelles p est 1 ou 2 et Q est un groupe alkyle en C₁-C₄ ou phényle, lorsque n est 2, représente un groupe alkylène en C₂-C₁₂, alcénylène en C₄-C₁₂, arylène en C₆-C₁₂, un groupe -CH₂-CH(OH)-CH₂-O-D-O-CH₂-CH (OH)-CH₂-, dans lequel D représente un groupe alkylène en C₂-C₁₀, arylène en C₆-C₁₅, cycloalkylène en C₆-C₁₂, ou un groupe -CH₂CH(OZ')CH₂-(OCH₂-CH(OZ')CH₂)₂-, dans lequel Z' représente un atome d'hydrogène, un groupe alkyle en C₁-C₁₈, allyle, benzyle, alcanoyle en C₂-C₁₂ ou benzoyle, T₁ et T₂ représentent indépendamment l'un de l'autre un atome d'hydrogène, un groupe alkyle en C₁-C₁₈ ou aryle en C₆-C₁₀ ou aralkyle en C₇-C₉ éventuellement substitué par un atome d'halogène ou un groupe alkyle en C₁-C₄ ou T₁ et T₂ représentent ensemble un cycle cycloalcane en C₅-C₁₂ avec l'atome de carbone les liant.

14. Formes commerciales selon la revendication 8, caractérisées en ce qu'elles contiennent une amine à empêchement stérique de formule 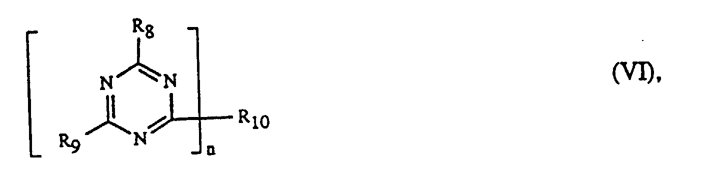 dans laquelle n est le nombre 1 ou 2 et R₈ représente un groupe de formule 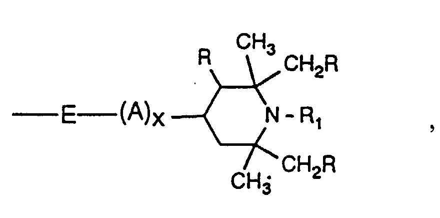 dans laquelle R et R₁ ont la signification indiquée sous la formule (II) dans la revendication 3, E est -O- ou -NR₁₁-, A représente un groupe alkylène en C₂-C₆ ou -(CH₂)₃-O- et x les nombres 0 ou 1, R₉ est égal à R₈ ou représente un des groupes -NR₁₁R_{12,} -OR₁₃, -NHCH₂OR₁₃ ou -N(CH₂OR₁₃)₂, R₁₀, lorsque n = 1, est égal à R₈ ou R₉, et lorsque n est égal à 2 représente un groupe -E-B-E-, dans lequel B représente un groupe alkylène en C₂-C₆ éventuellement interrompu par -N(R₁₁)-, R₁₁ est un groupe alkyle en C₁-C₁₂, cyclohexyle, benzyle ou hydroxyalkyle en C₁-C₄ ou est un groupe de formule 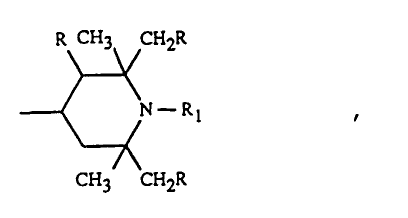 R₁₂ représente un groupe alkyle en C₁-C₁₂, cyclohexyle, benzyle, hydroxyalkyle en C₁-C₄ et R₁₃ représente un atome d'hydrogène, un groupe alkyle en C₁-C₁₂ ou phényle ou R₁₁ et R₁₂ sont ensemble un groupe alkylène ou oxyalkylène en C₄-C₅, par exemple 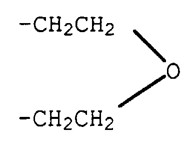 ou un groupe de formule 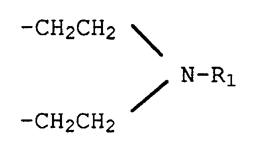 ou encore R₁₁ et R₁₂ représentent respectivement un groupe de formule

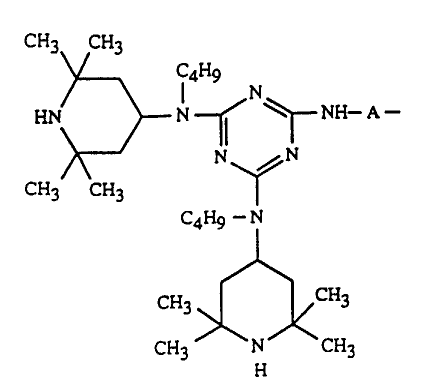

15. Formes commerciales selon la revendication 8, caractérisées en ce qu'elles contiennent comme amine à empêchement stérique des composés oligomères ou polymères, dont le motif récurrent de structure contient un groupe 2,2,6,6-tétraalkylpipéridine de formule (I) selon la revendication 2.

16. Formes commerciales selon la revendication 6, caractérisées en ce qu'elles contiennent comme absorbant d'UV un 2-(2'-hydroxyphényl)-benzotriazole, une 2-hydroxybenzophénone, un ester d'acide benzoïque éventuellement substitué ou une 2-(2-hydroxyphényl)-1,3,5-triazine.

17. Formes commerciales selon la revendication 16, caractérisées en ce qu'elles contiennent comme absorbant d'UV le 2-(2'-hydroxy-5'-méthylphényl)-benzotriazole, le 2-(3',5'-di-tert.-butyl-2'-hydroxyphényl)-benzotriazole, le 2-(5'-tert.-butyl-2'-hydroxyphényl)-benzotriazole, le 2-(2'-hydroxy-5'-(1,1,3,3-tétraméthylbutyl)phényl)benzotriazole, le 2-(3',5'-di-tert.-butyl-2'-hydroxyphényl)-5-chloro-benzotriazole, le 2-(3'-tert.-butyl-2'hydroxy-5'-méthylphényl)-5-chloro-benzotriazole, le 2-(3'-sec.-butyl-5'-tert.-butyl-2'-hydroxyphényl)-benzotriazole, le 2-(2'-hydroxy-4'-octoxyphényl)-benzotriazole, le 2-(3',5'-di-tert.-amyl-2'-hydroxyphényl)benzotriazole, le 2-(3',5'-bis(α,α-diméthylbenzyl)-2'-hydroxyphényl)-benzotriazole, un mélange de 2-(3'-tert.-butyl-2'-hydroxy-5'-(2-octyloxycarbonyléthyl)phényl)-5-chloro-benzotriazole, 2-(3'-tert.-butyl-5'-[2-(2-éthylhexyloxy)-carbonyléthyl]-2'-hydroxyphényl)-5-chlorobenzotriazole, 2-(3'-tert.-butyl-2'-hydroxy-5'-(2-méthoxycarbonyléthyl)-phényl)-5-chloro-benzotriazole, 2-(3'-tert.-butyl-2'-hydroxy-5'-(2-méthoxycarbonyléthyl)-phényl)-benzotriazole, 2-(3'-tert.-butyl-2'-hydroxy-5'-(2-octyloxycarbonyléthyl)phényl)-benzotriazole, 2-(3'-tert.-butyl-5'-[2-(2-éthylhexyloxy)carbonyléthyl]-2'-hydroxyphényl)-benzotriazole, 2-(3'-dodécyl-2'-hydroxy5'-méthylphényl)-benzotriazole, 2-(3'-tert.-butyl-2'-hydroxy-5'-(2-isooctyloxycarbonyléthyl)phényl)-benzotriazole, 2,2'-méthylèn-bis [4-(1,1,3,3-tétraméthylbutyl)6-benzotriazol-2-yl-phénol]; le produit de transestérification du 2-[3'-tert.-butyl-5'-(2-méthoxycarbonyléthyl)-2'-hydroxy-phényl]-benzotriazole avec le polyéthylène glycol 300; [R-CH₂CH₂-COO(CH₂)₃ 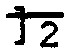 avec R = 3'-tert.-butyl-4'-hydroxy-5'-2H-benzotriazol-2-yl-phényle.

18. Formes commerciales selon la revendication 17, caractérisées en ce qu'elles contiennent comme absorbant d'UV le 2- (3'-dodécyl-2'-hydroxy-5'-méthylphényl)-benzotriazole.

19. Formes commerciales selon la revendication 7, caractérisées en ce qu'elles contiennent comme antioxydant un composé choisi parmi l'une des classes suivantes : monophénols alkylés, alkylthiométhylphénols, hydroquinones et hydroquinones alkylées, éthers thiodiphényliques hydroxylés, alkylidène-bisphénols, composés O-, N- et S-benzyle, malonates hydroxybenzylés, composés hydroxybenzyl-aromatiques, composés triazine, benzylphosphonates, acylaminophénols, esters de l'acide β-(3,5-di-tert.-butyl-4-hydroxyphényl)propionique, de l'acide β-(5-tert.-butyl-4-hydroxy-3-méthylphényl)-propionique, de l'acide β-(3,5-di-cyclohexyl-4-hydroxy-phényl)propionique ou de l'acide 3,5-di-tert.-butyl-4-hydroxy-phényl)acétique avec des alcools mono ou polyhydroxylés, amides de l'acide β-(3,5-di-tert.-butyl-4-hydroxy-phényl)-propionique.

20. Formes commerciales selon la revendication 19, caractérisées en ce qu'elles contiennent comme antioxydant un ester de l'acide β-(3,5-di-tert.-butyl-4-hydroxyphényl)propionique avec des alcools mono ou polyhydroxylés, dans lesquels il est question comme alcool du méthanol, de l'éthanol, de l'octanol, de l'octadécanol, du 1,6-hexanediol, du 1,9-nonanediol, de l'éthylèneglycol, du 1,2-propanediol, du néopentylglycol, du thiodiéthylèneglycol, du diéthylèneglycol, du triéthylèneglycol, du pentaérythritol, du tris-(hydroxyéthyl)isocyanurate, du N,N'-bis-(hydroxyéthyl)oxamide, du 3-thiaundécanol, du 3-thiapentadécanol, du triméthylhexanediol, du triméthylolpropane ou du 4-hydroxyméthyl-1-phospha-2,6,7-trioxabicyclo[2.2.2]octane.

21. Formes commerciales selon la revendication 20, caractérisées en ce qu'elles contiennent comme antioxydant l'acide β-(3,5-di-tert.-butyl-4-hydroxyphényl)-propionique, qui a été estérifié avec l'octanol.

22. Formes commerciales selon l'une des revendications 3 à 21, caractérisées en ce qu'elles contiennent comme agent émulsionnant un mélange de
b) un polyalcool, qui est totalement ou partiellement estérifié avec un acide gras, et
c) un produit de réaction d'un polyalcool, qui est totalement ou partiellement estérifié avec un acide gras, et d'un oxyde d'alkylène.

23. Formes commerciales selon la revendication 22, caractérisées en ce qu'elles contiennent comme agent émulsionnant un mélange d'un polyalcool, qui est totalement ou partiellement estérifié avec un acide gras, et d'un produit de réaction d'un polyalcool, qui est totalement ou partiellement estérifié avec un acide gras, et d'un oxyde d'alkylène, dans lesquelles il est question comme polyalcool du diglycol, des alkylène ou dialkylèneglycols, du sorbitanne, du sorbitol, du mannitol, du xylitol, du pentaérythritol, de la diglycérine, de la glycérine et du glycérylsorbitol.

24. Formes commerciales selon la revendication 23, caractérisées en ce qu'elles contiennent comme agent émulsionnant un mélange d'un polyalcool, qui est totalement ou partiellement estérifié avec un acide gras, et d'un produit de réaction d'un polyalcool, qui est totalement ou partiellement estérifié avec un acide gras, et d'un oxyde d'alkylène, dans lesquelles il est question comme acide gras de l'acide caprylique, caprique, laurique, myristique, palmitique, stéarique, arachidique, béhénique, de graisse de noix de coco en C₈-C₁₈, décénique, dodécénique, tétradécénique, hexadécénique, oléique, linoléique, linolénique, eicosénique, docosénique ou clupanodonique.

25. Formes commerciales selon la revendication 24, caractérisées en ce qu'elles contiennent comme polyalcool, qui est partiellement ou totalement estérifié avec un acide gras, le sorbitanne, le sorbitol, le mannitol, le xylitol ou le pentaérythritol, qui sont estérifiés avec 1 à 3 mol d'acide laurique, palmitique, stéarique, oléique, linoléique ou linolénique.

26. Formes commerciales selon l'une des revendications 5 à 25, caractérisées en ce qu'elles contiennent comme oxyde d'alkylène l'oxyde d'éthylène.

27. Formes commerciales selon la revendication 26, caractérisées en ce qu'elles contiennent des produits de réaction de sorbitanne estérifié avec 1 à 3 mol d'acide oléique avec 5 à 40 mol d'oxyde d'éthylène.

28. Formes commerciales selon la revendication 5, caractérisées en ce qu'elles contiennent
a) 75 à 95% en poids d'une amine à empêchement stérique insoluble dans l'eau, et
b) 25 à 5% en poids d'un mélange de
b1) un polyalcool, qui est complètement ou partiellement estérifié avec un acide gras et
b2) un produit de réaction d'un polyalcool, qui est complètement ou partiellement estérifié avec un acide gras, et d'un oxyde d'alkylène, dans lequel le rapport des composants b1):b2) se situe entre 3 : 7 et 7 : 3.

29. Formes commerciales selon la revendication 6, caractérisées en ce qu'elles contiennent
a) 75 à 95% en poids d'un absorbant UV insoluble dans l'eau et
b) 25 à 5% en poids d'un mélange de
b1) un polyalcool, qui est complètement ou partiellement estérifié avec un acide gras et
b2) un produit de réaction d'un polyalcool, qui est complètement ou partiellement estérifié avec un acide gras, et d'un oxyde d'alkylène, dans lequel le rapport des composants b1):b2) se situe entre 9 : 1 et 5 : 5.

30. Formes commerciales selon la revendication 7, caractérisées en ce qu'elles contiennent
a) 75 à 95% en poids d'un antioxydant insoluble dans l'eau et
b) 25 à 5% en poids d'un mélange de
b1) un polyalcool, qui est complètement ou partiellement estérifié avec un acide gras et
b2) un produit de réaction d'un polyalcool, qui est complètement ou partiellement estérifié avec un acide gras, et d'un oxyde d'alkylène, dans lequel le rapport des composants b1):b2) se situe entre 1 : 9 et 5 : 5.

31. Utilisation des formes commerciales selon l'une des revendications 5 à 30 comme agent de protection contre la lumière et/ou la chaleur pour des revêtements textile en copolymères contenant des polyuréthannes, des acrylates, des silicone-acrylates ou du styrène, pour des imitations du cuir en polyester/polyuréthanne ou polyamide/polyuréthanne, pour le polypropylène et pour le cuir

32. Utilisation des formes commerciales selon l'une des revendications 5 à 30 comme agent de protection contre la lumière pour le cuir.

33. Matériau avec une forme commerciale selon l'une des revendications 5 à 30 ou traité selon un procédé selon l'une des revendications 1 ou 2.
